# EUROPÄISCHE PATENTSCHRIFT

(11) **EP 3 532 884 B1**
(45) Veröffentlichungstag und Bekanntmachung des Hinweises auf die Patenterteilung: **16.04.2025**
(21) Anmeldenummer: 17791333.2
(22) Anmeldetag: 20.10.2017
(51) Int. Cl.: G02B 21/00, G02B 21/32

(54) **LICHTBLATTMIKROSKOP**
SINGLE PLANE ILLUMINATION MICROSCOPE
MICROSCOPE À FEUILLE DE LUMIÈRE

(30) Priorität: 28.10.2016 DE 102016120683
(43) Veröffentlichungstag der Anmeldung: 04.09.2019
(73) Patentinhaber: Carl Zeiss Microscopy GmbH, 07745 Jena (DE)
(72) Erfinder: KALKBRENNER, Thomas, 07745 Jena (DE); LIPPERT, Helmut, 07745 Jena (DE); SIEBENMORGEN, Joerg, 07743 Jena (DE); NETZ, Ralf, 07745 Jena (DE)
(74) Vertreter: Gleim Petri Patent- und Rechtsanwaltspartnerschaft mbB
(86) Internationale Anmeldenummer: PCT/EP2017/076824
(87) Internationale Veröffentlichungsnummer: WO 2018/077738

(56) Entgegenhaltungen:
- WO-A1-2006/097101
- WO-A1-2006/097101
- WO-A2-2015/109323
- WO-A2-2015/109323
- DE-A1- 102014 104 977
- DE-A1- 102014 104 977
- US-A1- 2012 206 798
- US-A1- 2012 206 798

## Beschreibung

### Gebiet der Erfindung

Die Erfindung betrifft ein Lichtblattmikroskop, welches eine Beleuchtungsoptik zur Beleuchtung einer Probe umfasst. Die Probe befindet sich auf einen Probenträger in einem Medium, beispielsweise einer Flüssigkeit oder in einem Gel. Der Probenträger ist dabei parallel zu einer ebenen Bezugsfläche ausgerichtet, diese Bezugsfläche kann beispielsweise die Ebene eines Probentisches sein, auf welcher sich der Probenträger befindet, beispielsweise eine planparallele Glasplatte vorgegebener Dicke oder ein entsprechendes Gefäß mit Wänden, dessen transparenter Boden parallel zu dieser Bezugsfläche ausgerichtet ist. Das Gefäß kann offen sein, es kann aber auch mit einem transparenten Deckglas verschlossen sein. Die Beleuchtungsoptik dient der Beleuchtung der Probe über einem Beleuchtungsstrahlengang, die Beleuchtung erfolgt mit einem Lichtblatt, dessen Lichtblattebene mit der Normalen der Bezugsfläche einen von Null verschiedenen Beleuchtungswinkel einschließt. Das Lichtblattmikroskop umfasst außerdem eine Detektionsoptik mit einem Detektionsstrahlengang mit einer optischen Achse, die im Bereich des Probenträgers mit der Normalen der Bezugsfläche einen von Null verschiedenen Detektionswinkel einschließt. Der Winkel zwischen Detektions- und Beleuchtungswinkel beträgt oft 90°, dies ist aber keine zwingende Vorgabe.

Das Lichtblattmikroskop umfasst zudem auch ein Trennschichtsystem mit mindestens einer Schicht aus einem vorgegebenen Material mit vorgegebener Dicke, welche das Medium, in welchem sich die Probe befindet, von der Beleuchtungs- und von der Detektionsoptik trennt. Dabei steht das Trennschichtsystem mit einer parallel zur Bezugsfläche ausgerichteten Grundfläche zumindest in dem für Beleuchtung und Detektion zugänglichen Bereich mit dem Medium in Kontakt. Im Falle eines invers aufgebauten Lichtblattmikroskops, bei dem Beleuchtung und Detektion unterhalb der Probe angeordnet sind, bildet der transparente Boden des Probengefäßes bzw. die Probenträgerplatte zusammen mit der Luftschicht oder einem Immersionsmedium, die sich zwischen dem Boden und den Optiken befinden, das Trennschichtsystem. Bei einer Beobachtung von oben bildet beispielsweise ein transparenter Deckel des Probengefäßes zusammen mit der Luftschicht bzw. dem Immersionsmedium zwischen Deckel und Beleuchtungs- und Detektionsoptik das Trennschichtsystem.

Da die Beleuchtungs- und die Detektionsoptik mit der Normalen der Bezugsfläche jeweils einen von Null verschiedenen Winkel einschließen, ist im Beleuchtungs- und / oder im Detektionsstrahlengang mindestens ein Korrekturelement zur Verringerung von solchen Aberrationen angeordnet, welche aufgrund des schrägen Durchtritts von zu detektierendem Licht bzw. von Licht zur Beleuchtung der Probe durch Grenzflächen des Trennschichtsystems entstehen.

### Stand der Technik

Lichtblattmikroskope werden insbesondere bei der Untersuchung von biologischen Proben eingesetzt, bei welcher die Beleuchtung der Proben mit einem Lichtblatt, dessen Ebene die optische Achse der Detektion in einem von Null verschiedenen Winkel schneidet, erfolgt. Üblicherweise schließt dabei das Lichtblatt mit der Detektionsrichtung, die beispielsweise der optischen Achse eines nur für die Detektion verwendeten Detektionsobjektivs entsprechen kann, einen rechten Winkel ein. Mit dieser auch als SPIM (Selective Plane Illumination Microscopy) bezeichneten Technik lassen sich in relativ kurzer Zeit räumliche Aufnahmen auch dickerer Proben erstellen. Auf der Basis von optischen Schnitten kombiniert mit einer Relativbewegung zwischen Probe und Lichtblatt, d.h. in einer Richtung senkrecht zur Schnittebene, ist eine bildliche, räumlich ausgedehnte Darstellung der Probe möglich.

Die SPIM-Technik wird bevorzugt in der Fluoreszenzmikroskopie eingesetzt und wird dort mit dem Begriff LSFM (Light Sheet Fluorescence Microscopy) bezeichnet. Gegenüber anderen etablierten Verfahren wie der konfokalen Laser-Scanning-Mikroskopie oder der Zwei-Photonen-Mikroskopie weisen LSFM-Verfahren und Anordnungen mehrere Vorzüge auf: Da die Detektion im Weitfeld erfolgen kann, lassen sich größere Probenbereiche erfassen. Zwar ist die Auflösung etwas geringer als bei der konfokalen Laser-Scanning-Mikroskopie, jedoch lassen sich mittels LSFM dickere Proben analysieren, da die Eindringtiefe höher ist. Darüber hinaus ist die Lichtbelastung der Proben bei diesem Verfahren am geringsten, was unter anderem die Gefahr eines unerwünschten Ausbleichens der Probe reduziert, da sie nur durch ein dünnes Lichtblatt in einem von Null verschiedenen Winkel zur Detektionsrichtung beleuchtet wird.

Dabei kann sowohl ein statisches Lichtblatt, welches beispielsweise mit Hilfe von Zylinderlinsen erzeugt wird, verwendet werden, als auch ein quasi-statisches Lichtblatt. Letzteres kann erzeugt werden, indem die Probe mit einem Lichtstrahl schnell abgetastet wird. Die lichtblattartige Beleuchtung entsteht, indem der Lichtstrahl einer sehr schnellen Relativbewegung zu der beobachteten Probe unterworfen wird und dabei zeitlich aufeinanderfolgend mehrfach aneinandergereiht wird. Dabei wird die Integrationszeit der Kamera, auf deren Sensor die Probe letztendlich abgebildet wird, so gewählt, dass die Abtastung innerhalb der Integrationszeit abgeschlossen wird. Anstelle einer Kamera mit einem zweidimensionalen Sensorfeld kann auch ein Zeilensensor in Kombination mit einem erneuten Abtasten (Rescan) in der Detektionsoptik verwendet werden. Außerdem kann die Detektion auch konfokal erfolgen.

Die SPIM-Technik ist inzwischen etabliert und in der Literatur mittlerweile vielfach beschrieben, beispielsweise in der DE 102 57 423 A1 und der darauf aufbauenden WO 2004/053558 A1 oder in dem Übersichtsartikel "Selective plane illumination microscopy technics in developmental biology" von J. Huisken et.al., erschienen im Jahr 2009 in der Zeitschrift Development, Bd. 136, S. 1963.

Lichtblattmikroskope, die nach dem SPIM-Verfahren arbeiten, werden bisher weitestgehend nur zur Beobachtung von Proben eingesetzt. Zur tiefergehenden Untersuchung von Proben ist es jedoch oft wünschenswert, an diesen optische Manipulationen vorzunehmen. Unter dem Begriff der optischen Manipulation wird dabei im Zusammenhang mit der vorliegenden Erfindung die Photostimulation verstanden, d.h. das Deponieren von Lichtintensität an vorgegebenen Orten und Zeiten in der Probe in lateral und axial eingeschränkten Bereichen, deren Form, Größe und für eine simultane Manipulation Anzahl vorgegeben werden kann, wobei die Probe durch das Manipulationslicht nicht vollständig durchdrungen werden darf und wobei das Deponieren der Lichtintensität eine optisch getriebene Reaktion an den vorgegebenen Orten hervorruft. Solche Reaktionen können beispielsweise im Bleichen der Probe, in der Photokonversion, im Uncaging etc. bestehen. Die optische Manipulation in Proben, bei denen das Manipulationslicht entlang der Manipulationsrichtung nur in Bereichen, die manipuliert werden sollen, mit der Probe wechselwirkt, soll im Folgenden als lokale optische Manipulation bezeichnet werden.

Im Stand der Technik sind dazu verschiedene Verfahren bekannt. So lassen sich beispielsweise mittels eines Punktscanners, d.h. mit einem Laser-Scanning-Mikroskop, bei dem die Detektion nicht konfokal erfolgt, beliebige Positionen in einer Ebene, beispielsweise in der Lichtblattebene, schnell ansteuern. Im Fokus lassen sich dabei hohe Intensitäten erzeugen. Nachteilig ist dabei, dass die einzelnen Positionen zeitlich nacheinander angesteuert werden müssen. Eine Positionierung in axialer Richtung muss über die Fokussierung erfolgen, beispielsweise eine Innenfokussierung im Objektiv, oder über eine entsprechende Bewegung der Probe. Ein weiterer Nachteil ist, dass Bereiche unter- und oberhalb der Zielposition in axialer Richtung komplett durchdrungen werden, wobei es in Abhängigkeit von der Intensität auch außerhalb des eigentlich fokussierten Bereichs zu Wechselwirkungen mit der Probe kommen kann. Mittels entsprechender Optiken lässt sich auch ein Multipunktscanner realisieren, bei dem mehrere Punkte gleichzeitig angesteuert werden.

Zur Erzeugung eines zweidimensionalen Intensitätsmusters lässt sich beispielsweise ein digitales Mikrospiegelarray (DMD-Array) verwenden, welches in einer Zwischenbildebene in der Beleuchtungsoptik angeordnet ist. Die einzelnen Pixel können an- oder ausgeschaltet werden und definieren direkt die beleuchteten Regionen in der Probe. Dies wird beispielsweise in dem Artikel "Probing the function of neuronal populations: combining micromirror-based optogenetic photostimulation with voltage-sensitive dye imaging" von S. Tsuda et al., erschienen in "Neuroscience Research" 75 (1), S. 76 im Jahr 2013, beschrieben. Anstelle eines DMD-Arrays kann auch ein LCD-Array in Transmission verwendet werden, hierbei entstehen jedoch hohe Verluste bei der eingestrahlten Lichtleistung. Auch LED-Arrays können anstelle von DMDs verwendet werden, diese werden dann direkt zur Beleuchtung eingesetzt, und wie beim DMD wird die Amplitude der Beleuchtung pixelbasiert moduliert. Der Vorteil gegenüber dem DMD-Array liegt in der höheren Modulationsfrequenz im MHz-Bereich, wohingegen die Modulationsfrequenz bei DMD-Arrays im kHz-Bereich liegt. Die Verwendung eines LED-Arrays zur Strukturierung des Beleuchtungslichts ist beispielsweise im Artikel "Multi-site optical excitation using ChR2 and micro-LED array" von N. Grossman et al., erschienen im "Journal of Neural Engineering" 7 (1), S. 016004 im Jahr 2010, beschrieben.

Die Verwendung räumlicher Lichtmodulatoren (SLM) lässt die Photostimulation in räumlichen ausgedehnten Gebieten zu, d.h. also nicht nur in einer Ebene beispielsweise senkrecht zur Detektions- oder Beleuchtungsrichtung, sondern auch axial in dieser Richtung. Der räumliche Lichtmodulator wird dazu in einer Pupillenebene des Manipulationsstrahlengangs angeordnet und ihm wird ein Phasenmuster aufgeprägt, welches also die Phase des zur Manipulation verwendeten Lichtes verändert. Durch die Abbildung ergibt sich dann die gewünschte Intensitätsverteilung. Dieser Ansatz wird beispielsweise im Artikel "Three-dimensional imaging and photostimulation by remote-focusing and holographic light patterning" von F. Anselmi et al., erschienen in "Proceedings of the National Academy of Sciences" 108 (49), S. 19504 ff. im Jahr 2011, beschrieben. Dabei wird eine Intensitätsverteilung vorgegeben, welche beispielsweise anhand des Probenaufbaus aus einem zuvor aufgenommenen Übersichtsbild oder aus einem räumlichen Übersichts-Scan bestimmt werden kann. Aus dieser vorgegebenen Intensitätsverteilung wird unter Verwendung von Algorithmen, die auf inversen Fourier-Transformationen basieren, iterativ das erforderliche Phasenmuster berechnet, welches dem SLM aufgeprägt werden muss. Diese Vorgehensweise wird beispielsweise im Artikel "Experimental demonstration of holographic three-dimensional light shaping using a Gerchberg-Saxton algorithm" von G. Whyte et al., erschienen im "New Journal of Physics" 7, S. 117 im Jahr 2005, beschrieben. Aufgrund der Komplexität dieser Vorgehensweise und der geringeren Frame-Rate der i.d.R. auf Flüssigkristallelementen basierenden räumlichen Lichtmodulatoren lassen sich die Muster hier jedoch nur in einer sehr langsamen zeitlichen Abfolge ändern, etwa mit einer Frequenz von einigen 10 Hz. Im Vergleich mit der zweidimensionalen Strukturierung sind diese Methoden etwa hundertmal langsamer.

Eine besonders gute lokale Beschränkung der optischen Manipulation auf ein im Wesentlichen punkförmiges Gebiet im Raum lässt sich auch mit dem Konzept der Multiphotonen-Anregung erreichen. Dabei wird ein Laserpuls in das Gebiet abgebildet, welcher nur im Fokus eine extrem hohe Intensität aufweist. Ein solcher Puls lässt sich beispielsweise mit einem Femtosekunden-Laser erzeugen. Die Wellenlänge dieses Lasers wird so gewählt, dass eventuell vorhandene Farbstoffe in der Probe nicht zur Fluoreszenz angeregt werden. Im Allgemeinen handelt es sich um Wellenlängen im nahen Infrarot. Die Intensität des Lichtes ist im Fokus jedoch so hoch, dass die Wahrscheinlichkeit, dass zwei oder mehr Photonen gleichzeitig absorbiert werden und einen entsprechenden fluoreszenzanregenden Übergang auslösen, besonders hoch ist. Dies ermöglicht eine gezielte Anregung nur in der Fokusebene und nicht ober- oder unterhalb der Fokusebene wie bei der Ein-Photonen-Anregung, da dort die Intensität zu gering ist. Auch die Eindringtiefe bei der Bildgebung kann bei der Verwendung abtastender Systeme mit Multiphotonen-Anregung gesteigert werden. Da außerdem Wellenlängen im nahen Infrarotbereich verwendet werden, ist diese Vorgehensweise insbesondere für die biologischen Proben, die noch leben, vorteilhaft. Das Verfahren der Multiphotonen-Anregung lässt sich mit der punktförmigen Abtastung kombinieren, aber auch mit einer Multipunkt-Beleuchtung, bei der die Probe in vielen Punkten gleichzeitig beleuchtet wird. Dies kann beispielsweise durch einen räumlichen Lichtmodulator im Manipulationsstrahlengang, dem ein iterativ berechnetes Phasenmuster aufgeprägt ist, erreicht werden. Dieser Ansatz im Rahmen einer Zwei-Photonen-Anregung ist beispielsweise im Artikel "SLM microscopy: scanless two-photon imaging and photostimulation with spatial light modulators" von V. Nikolenko et al., erschienen in der Zeitschrift "Frontiers in Neural Circuits", Vol. 2 (5), S. 1 am 19. Dezember 2008, beschrieben.

Während beim Punktscanner unter Verwendung der Multiphotonen-Anregung, insbesondere der Zwei-Photonen-Anregung sich die Tiefendiskriminierung durch die quadratische Intensitätsabhängigkeit der Anregung in Kombination mit einer starken Fokussierung in der Ebene ohne weiteres erzeugen lässt, ist dies in der Weitfeld-Abbildung nicht ohne weiter Hilfsmittel möglich. Verwendet man jedoch ein diffraktives optisches Element, wie beispielsweise ein Gitter, lassen sich kurze Laserpulse spektral aufspalten. Dieses diffraktive optische Element wird dann über das Mikroskopobjektiv in die Probe abgebildet. In der Folge nehmen die unterschiedlichen spektralen Elemente der Pulse des Beleuchtungslichts unterschiedliche optische Wege und treffen erst in der Fokusebene wieder zusammen, um dann dort den ursprünglichen, sehr kurzen Laserpuls zu bilden. Auf diese Weise ist die Spitzenleistung des Pulses nur in der Fokusebene maximal, was im Zusammenhang mit der oben bereits erwähnten quadratischen Intensitätsabhängigkeit der Zwei-Photonen-Anregung auch in der Weitfeldbeleuchtung zu der gewünschten Tiefendiskriminierung führt. Dieser auch als "zeitliche Fokussierung" (temporal focusing) bezeichnete Ansatz wird beispielsweise im Artikel "Scanningless depth-resolved microscopy" von D. Oron et al., erschienen in der Zeitschrift "Optics Express" 13 (5), S. 14687 im Jahr 2005, beschrieben.

All die vorangehend beschriebenen Methoden zur schonenden Photostimulation wurden bisher überwiegend noch nicht für die Lichtblattmikroskopie eingesetzt. In der US 8,547,634 B2 werden allerdings verschiedene Anordnungen zur Photomanipulation einer Probe in der Lichtblattmikroskopie vorgeschlagen. Sämtliche dieser Anordnungen umfassen dabei immer auch eine Manipulation über den Beleuchtungsstrahlengang, in welchem das Manipulationslicht ebenfalls zu einem Lichtblatt geformt wird, wobei die Lichtquelle, die zur Erzeugung des Lichtblattes verwendet wird, oder eine eigene Manipulationslichtquelle verwendet werden kann. Eine axial lokal begrenzte Photostimulation ist auf diese Weise nicht möglich. In der US 8,547,634 B2 wird außerdem die Möglichkeit beschrieben, zusätzlich zur ersten Manipulationsbeleuchtung mittels eines Lichtblatts eine zweite Manipulationsoptik zu verwenden, bei der das Manipulationslicht über die Detektionsoptik auf die Probe gelenkt wird. Dabei wird vorgeschlagen, als zweite Manipulationsoptik ein Laser-Scanning-Mikroskop zu verwenden. Mit dieser zweiten Manipulationsoptik ist prinzipiell eine Manipulation ausschließlich in der Lichtblattebene möglich, wobei jedoch das Manipulationslicht der zweiten Lichtquelle die Probe entlang der Normalrichtung des Lichtblattes in der Regel in einem größeren Bereich durchdringt bzw. in einem größeren Bereich in diese eindringt. Auch in der Lichtblattebene erfolgt die Manipulation bzw. die Beleuchtung mit Manipulationslicht entlang der gesamten Ausdehnung des Lichtblatts axial im Beleuchtungslicht.

Weitere Beispiele für Lichtblattmikroskope mit Manipulationsbeleuchtung sind aus WO 2015/109323 A2 und US 2012/206798 A1 bekannt.

### Beschreibung der Erfindung

Die Aufgabe der Erfindung besteht daher darin, ein Lichtblattmikroskop der eingangs beschriebenen Art dahingehend weiterzuentwickeln, dass eine probenschonende Beobachtung von Proben ermöglicht wird.

Diese Aufgabe wird bei einem Lichtblattmikroskop der eingangs beschriebenen Art, welches insbesondere zur inversen Beobachtung einer Probe ausgebildet ist, gelöst, indem das Lichtblattmikroskop ausschließlich von der Lichtblatterzeugung unabhängige Mittel zur Beaufschlagung der Probe mit Lichtintensität in im Wesentlichen punktförmigen Gebieten in der Lichtblattebene oder in einem vorgegebenen, die Lichtblattebene mindestens zeitweise umfassenden Volumen über mindestens einen Manipulationsstrahlengang umfasst.

Durch die Beschränkung auf im Wesentlichen punktförmige Gebiete, d.h. insbesondere lateral, beispielsweise - jedoch nicht ausschließlich - bei einer Manipulation in einer Ebene, aber bevorzugt auch axial gegenüber dem gesamten Volumen der Probe eingeschränkte Gebiete, deren Größe selbstverständlich von verschiedenen Faktoren wie der lateralen und axialen Fokussierung, den verwendeten Anregungsmechanismen, den Manipulationsmitteln selbst, etc. abhängt, kann eine besonders probenschonende Manipulation erreicht werden. Die im Wesentlichen punktförmigen Gebiete können dabei ihrerseits ein größeres Gebiet im Sinne einer "region of interest" (ROI) sowohl im zwei- als auch im dreidimensionalen Raum definieren, von denen ihrerseits wieder mehrere, voneinander unabhängige und nicht zusammenhängende ROI in einem zu manipulierenden Volumen definiert sein können. Der Begriff "Punkt" soll hier nicht im mathematischen Sinne verstanden werden, sondern deutlich machen, dass die auszuwählenden, zu manipulierenden Gebiete so klein wie möglich sein sollen.

Manipulation und Beobachtung / Beleuchtung sind dabei prinzipiell unabhängig voneinander. So kann mit dem Lichtblatt beispielsweise ein Bereich oder ROI des Volumens beobachtet werden, während in einem anderen Bereich manipuliert wird. Dieser andere Bereich wird erst anschließend vom Lichtblatt beleuchtet. Das Volumen, in welchem manipuliert wurde, bzw. die im Wesentlichen punktförmigen Gebiete müssen sich daher nicht in der Lichtblattebene befinden, während in Ihnen Intensität deponiert wird. Erst im Anschluss werden sie vom Lichtblatt, ggf. nach Ablauf einer vorgegebenen Zeit, erfasst.

Die Beleuchtungsoptik des Lichtblattmikroskops umfasst in der Regel zweckmäßig ein Beleuchtungsobjektiv und die Detektionsoptik ein Detektionsobjektiv, wobei Beleuchtung und Detektion auch durch dasselbe Objektiv erfolgen können, das Beleuchtungsobjektiv also mit dem Detektionsobjektiv identisch sein kann. Auch können sich Beleuchtung und Detektion einzelne optische Elemente im Strahlengang teilen, beispielsweise Korrekturelemente. Die Mittel zur Manipulation umfassen erfindungsgemäß ein gesondertes Manipulationsobjektiv im Manipulationsstrahlengang. In einer nicht der beanspruchten Erfindung entsprechenden Ausgestaltung kann die Manipulation auch durch das Beleuchtungsobjektiv oder durch das Detektionsobjektiv erfolgen, in diesen Fällen ist das Manipulationsobjektiv mit dem Beleuchtungsobjektiv bzw. mit dem Detektionsobjektiv identisch. Diese beiden Varianten haben den Vorteil, dass kein zusätzliches Objektiv benötigt wird, jedoch ist gegenüber der Verwendung eines eigenen Manipulationsobjektivs die Konfiguration etwas weniger flexibel. Besonders bevorzugt unter diesen nicht erfindungsgemäßen Varianten wird die Manipulation durch das Detektionsobjektiv erfolgen, da dieses oft senkrecht zum Lichtblatt angeordnet ist, was die flächige Manipulation in der Lichtblattebene oder in einem Volumen um die Lichtblattebene erleichtert.

Die Manipulation kann prinzipiell durch jedes der drei genannten Objektive erfolgen und die im Folgenden detailliert erläuterten Elemente, die die Mittel zur Manipulation ergänzen, können in der Regel mit jedem der drei Objektive verwendet werden, erfindungsgemäß wird das zur Manipulation verwendete Licht aber nur in einen eigenen Manipulationsstrahlengang eingekoppelt. Bei der nicht erfindungsgemäßen Verwendung des Beleuchtungsstrahlengangs teilen sich Manipulation und Beleuchtung zwar optische Elemente, jedoch unabhängig voneinander und ohne sich gegenseitig zu beeinflussen. Insbesondere wird das zur Manipulation verwendete Licht nicht zu einem Lichtblatt geformt.

In einer einfach zu realisierenden Ausführung umfassen die Mittel zur Manipulation einen Punktscanner zur zeitlich sequentiellen Beaufschlagung einzelner im Wesentlichen punktförmiger Gebiete der Probe mit Lichtintensität oder einen Multipunktscanner zur zeitlich sequentiellen Beaufschlagung einer Vielzahl im Wesentlichen punktförmiger Gebiete der Probe, von denen jeweils eine Anzahl gleichzeitig mit Lichtintensität beaufschlagbar ist. Der Multipunkt-Scanner ist analog zum Punktscanner aufgebaut, zur Multipunkt-Erzeugung kann beispielsweise ein Mikrolinsenarray verwendet werden.

Mittels eines ersten räumlichen Lichtmodulators kann die Probe auch mit einer vorgegebenen Intensitätsverteilung beaufschlagt werden, dies erfolgt dann im Wesentlichen bei konstanter Amplitude. Um der vorgegebenen Intensitätsverteilung auch eine vorgegebene Amplitudenverteilung aufzuprägen, können die Mittel zur Manipulation einen zweiten räumlichen Lichtmodulator umfassen.

In einer weiteren Ausgestaltung umfassen die Mittel zur Manipulation ein digitales Mikrospiegelarray (DMD) zur Erzeugung einer vorgegebenen Intensitätsverteilung in einer Ebene, die bevorzugt parallel zur Lichtblattebene liegt, besonders bevorzugt in der Lichtblattebene. Bei paralleler Lage zur Lichtblattebene erfolgt die Manipulation zweckmäßig durch das Detektionsobjektiv oder ein gesondertes Manipulationsobjektiv.

Die voranstehend genannten Mittel zur Manipulation lassen sich in einer besonders bevorzugten Ausgestaltung kombinieren, um die Manipulationsgeschwindigkeit zu steigern, da die DMD schneller schaltbar sind als räumliche Lichtmodulatoren. In einer bevorzugten Ausgestaltung umfasst das Lichtblattmikroskop daher auch Umschaltmittel, bevorzugt einen Schaltspiegel zur Umschaltung zwischen dem ersten räumlichen Lichtmodulator, dem digitalen Mikrospiegelarray oder einer Kombination von beiden. Zusätzlich kann zum ersten räumlichen Lichtmodulator auch der zweite räumliche Lichtmodulator verwendet werden. Auf diese Weise lässt sich beispielsweise der räumliche Lichtmodulator verwenden, um mit einem entsprechenden Phasenmuster mehrere räumliche Gebiete zu definieren, welche dann vom DMD schnell individuell zu- und abgeschaltet werden können.

Ist das Manipulationsobjektiv mit dem Detektionsobjektiv identisch, so lässt sich der erste oder zweite räumliche Lichtmodulator in einer besonders bevorzugten Ausgestaltung sowohl für die Manipulation der Probe als auch für die Korrektur der Aberrationen verwenden. Dazu ist ein erster Bereich eines der räumlichen Lichtmodulatoren zur Beaufschlagung der Probe mit einer vorgegebenen Intensitäts- oder Amplitudenverteilung und als Korrekturelement ausgebildet und ein zweiter Bereich des räumlichen Lichtmodulators ausschließlich als Korrekturelement im Detektionsstrahlengang. Erreicht werden kann dies über eine entsprechende Steuerung des SLM. Dabei sind Umlenkungsmittel vorgesehen, die das zu detektierende Licht auf den zweiten Bereich und das für die Manipulation verwendete Licht auf den ersten Bereich umlenken. Dies kann äquivalent auch mit dem Beleuchtungsobjektiv realisiert werden, falls die Manipulation durch das Beleuchtungsobjektiv erfolgt, dieses also mit dem Manipulationsobjektiv identisch ist, oder - falls erforderlich - auch mit dem Manipulationsobjektiv.

Auf diese Weise lassen sich Kosten reduzieren, da für den Detektionsstrahlengang bzw. den Beleuchtungsstrahlengang kein gesondertes Korrekturelement vorgesehen werden muss. Selbstverständlich lassen sich - ergänzend oder alternativ - auch Korrekturelemente, wie sie aus dem Stand der Technik bekannt sich, verwenden, beispielsweise sogenannte Alvarez-Platten, bei denen es sich um zwei gegeneinander verschiebbare, im Wesentlichen plattenförmige Elemente handelt, denen eine entsprechende, die Aberrationen korrigierende Oberflächenstruktur aufgeprägt ist, und welche lateral gegeneinander verschiebbar sein können. Es kann sich bei den Oberflächenstrukturen um Freiformflächen handeln, die Platten haben die Funktion von Wellenfrontmodulatoren. Ein solches Korrekturelement ist beispielsweise in der DE 10 2014 104 977 A1 beschrieben. Das Korrekturelement kann auch ergänzend oder alternativ als optisches Übertragungssystem, als sogenanntes virtuelles Relay ausgestaltet sein, wie es beispielsweise in der DE 10 2013 112 600 A1 beschrieben ist. Dieses Korrekturelement kann so dimensioniert werden, dass es sowohl für das Beleuchtungs- als auch für das Detektionsobjektiv verwendet werden kann, und es wird zwischen diese Objektive und das Trennschichtsystem gebracht. Weitere Korrekturelemente, die ebenfalls einzeln oder in Kombination mit den bereits genannten eingesetzt werden können, umfassen deformierbare Spiegel oder, wie schon erwähnt, räumliche Lichtmodulatoren.

Die Umlenkmittel umfassen bevorzugt ein dichroitisches Element, dessen parallel zueinander ausgerichtete aktive optischen Flächen bevorzugt senkrecht zur aktiven optischen Fläche des räumlichen Lichtmodulators angeordnet sind, wobei der Strahlengang so geführt ist, dass das für die Manipulation verwendete und das zu detektierende Licht jeweils zweimal auf das dichroitische Element gelenkt werden und mittels der Dicke des dichroitischen Elements die Umlenkung auf den jeweiligen Bereich erreicht wird. Das dichroitische Element muss dabei nicht notwendigerweise wie beschrieben senkrecht angeordnet werden, muss bei entsprechender Schrägstellung jedoch gegebenenfalls noch dicker ausgeführt werden.

Die Konfiguration mit einem SLM, der in zwei Bereiche geteilt ist, welche verschieden beleuchtet werden, lässt sich analog auch auf den Beleuchtungsstrahlengang übertragen, wobei hier der eine Bereich zur Lichtblatterzeugung und der andere Bereich zur Manipulationsbeleuchtung ausgebildet ist. Ergänzend kann der SLM in beiden Bereichen auch noch die Funktion eines Korrekturelements übernehmen.

Besonders vorteilhaft sind die Lichtquellen, Wellenlängen und Intensitäten des Manipulationslichts zur Anregung von zwei und mehr Photonenübergängen ausgelegt, so dass eine besonders probenschonende Manipulation auf lokal sehr stark räumlich begrenzten Gebieten erreicht werden kann. Zur axialen Lokalisierung der Intensität des zur Manipulation verwendeten Lichts entlang der Achse des Manipulationsstrahlengangs, also beispielsweise des Detektionsobjektivs, ist bevorzugt ein Zeitliche-Fokussierungs-Mechanismus vorgesehen, welcher bevorzugt einen Femtosekunden-Pulslaser mit einer Steuerung zur Kontrolle der Gruppengeschwindigkeits-Dispersion umfasst.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

### Kurze Beschreibung der Zeichnungen

Nachfolgend wird die Erfindung beispielsweise anhand der beigefügten Zeichnungen, die auch erfindungswesentliche Merkmale offenbaren, noch näher erläutert. Es zeigen:
- Fig. 1: einen allgemeinen Aufbau zur probenschonenden Lichtblattmikroskopie,
- Fig. 2: eine erste nicht erfindungsgemäße Ausgestaltung der Manipulation durch das Detektionsobjektiv,
- Fig. 3a), b): zwei weitere nicht erfindungsgemäße Ausgestaltungen zur Manipulation durch das Detektionsobjektiv,
- Fig. 4: eine vierte nicht erfindungsgemäße Ausgestaltung der Manipulation durch das Detektionsobjektiv,
- Fig. 5: eine fünfte nicht erfindungsgemäße Ausgestaltung der Manipulation durch das Detektionsobjektiv,
- Fig. 6a)-c): Erfindungsgemäße Ausgestaltungen zur Manipulation durch ein gesondertes Manipulationsobjektiv,
- Fig. 7a), b): zwei mögliche Fälle der nicht erfindungsgemäßen Manipulation durch das Beleuchtungsobjektiv,
- Fig. 8: eine erste Ausgestaltung eines Lichtblattmikroskops mit nicht erfindungsgemäßer Manipulation durch das Beleuchtungsobjektiv,
- Fig. 9: eine zweite Ausgestaltung der nicht erfindungsgemäßen Manipulation durch das Beleuchtungsobjektiv,
- Fig. 10: eine dritte Ausgestaltung der nicht erfindungsgemäßen Manipulation durch das Beleuchtungsobjektiv,
- Fig. 11: die Verwendung zeitlicher Fokussierung mit dem Lichtblatt,
- Fig. 12: eine prinzipielle Darstellung der Manipulation aus zwei Richtungen,
- Fig. 13: eine Anordnung zur Mehrphotonen-Manipulation und
- Fig. 14: die Vorgehensweise für Manipulation und Abbildung.

### Ausführliche Beschreibung der Zeichnungen

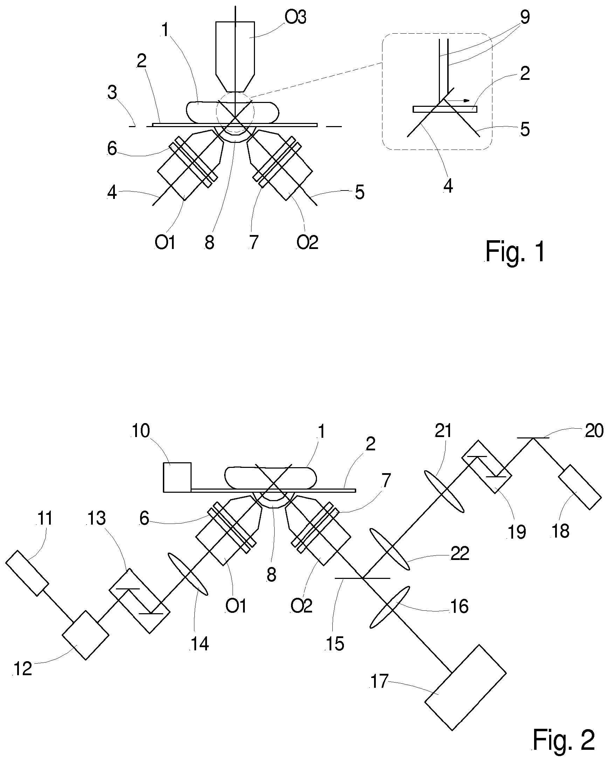

Fig. 1 zeigt zunächst den generellen Aufbau, wie er für die probenschonende Lichtblattmikroskopie mit gleichzeitiger Manipulation eingesetzt werden kann. Eine Probe 1 ist auf einem Probenträger 2 angeordnet. Die lichtblattmikroskopische Beobachtung erfolgt hier in inverser Konfiguration, ein Beleuchtungsobjektiv O1 und ein Detektionsobjektiv O2 sind unterhalb des Probenträgers 2, der Teil eines Trennschichtsystems ist, angeordnet. Der Probenträger 2 ist parallel zu einer ebenen Bezugsfläche 3 ausgerichtet, diese kann beispielsweise mit der Unterseite des Probenträgers 2 korrespondieren. Die Probe 1 kann in einem Medium eingebettet sein, was hier nicht gesondert dargestellt ist. Über das Beleuchtungsobjektiv O1 wird die Probe 1 über einen Beleuchtungsstrahlengang mit einem Lichtblatt beleuchtet, dessen Lichtblattebene, hier korrespondierend zur optischen Achse 4 des Beleuchtungsobjektivs O1, mit der Normalen der Bezugsfläche einen von Null verschiedenen Beleuchtungswinkel einschließt. Das Detektionsobjektiv O2 ist Teil einer Detektionsoptik mit einem Detektionsstrahlengang, dessen optische Achse 5 im Bereich des Probenträgers 2 mit der Normalen der Bezugsfläche 3 ebenfalls einen von Null verschiedenen Detektionswinkel einschließt. Die optische Achse 5 entspricht hier der optischen Achse des Detektionsobjektivs O2. Zur Korrektur bzw. Verringerung von solchen Aberrationen, welche aufgrund des schrägen Durchtritts von zu detektierendem Licht bzw. von Licht zur Beleuchtung der Probe 1 durch Grenzflächen des Trennschichtsystems - umfassend den Probenträger 2 und die darunter befindliche Luftschicht - entstehen, umfasst das Lichtblattmikroskop mindestens ein Korrekturelement, hier sind es mehrere Korrekturelemente. Zum einen umfasst das Beleuchtungsobjektiv O1 ein Korrekturelement in Form eines Wellenfrontmanipulators 6 und das Detektionsobjektiv O2 ein Korrekturelement in Form eines weiteren Wellenfrontmanipulators 7, die Wellenfrontmanipulatoren 6 und 7 werden aus gegeneinander lateral in Bezug auf die optischen Achsen 4 bzw. 5 verschiebbaren Platten mit Freiformflächen gebildet, diese werden auch als Alvarez-Platten bezeichnet. Außerdem ist zwischen dem Objektiven und der Unterseite des Probenträgers 2 ein weiteres, für beide Objektive O1 und O2 gemeinsames Korrekturelement in Form eines virtuellen Relays, d.h. eines optischen Übertragungssystems 8 angeordnet. Für die Manipulation wird hier beispielhaft zur Verdeutlichung ein eigenes Manipulationsobjektiv O3 verwendet. Mit diesem - oder mit den anderen beiden Objektiven - lassen sich bevorzugt ausschließlich von der Lichtblatterzeugung unabhängige Mittel zur Beaufschlagung der Probe mit Lichtintensität, bevorzugt ausschließlich in im Wesentlichen punktförmigen Gebieten der Lichtblattebene oder in einem vorgegebenen, die Lichtblattebene mindestens zeitweise umfassenden Volumen, über mindestens einen Manipulationsstrahlengang realisieren. Rechts in Fig. 1 in dem im gestrichelten Kästchen gezeigten Ausschnitt sind zwei Manipulationsstrahlen 9 angedeutet, deren Enden im Lichtblatt liegen und damit in der Brennebene des Detektionsobjektivs O2, und die mit einer vorgegebenen Intensität beaufschlagt werden sollen.

Die Mittel zur Beaufschlagung der Probe 1 mit Lichtintensität sollen im Folgenden anhand von verschiedenen beispielhaften Ausführungen noch näher erläutert werden.

Fig. 2 zeigt eine nicht erfindungsgemäße Ausführung eines Lichtblattmikroskops, bei dem die Manipulation durch das Detektionsobjektiv O2 erfolgt, bei dem das Manipulationsobjektiv also mit dem Detektionsobjektiv O2 identisch ist. Der Probentisch mit dem Probenträger 2 ist hier mit einer Probentischsteuerung 10 zur räumlichen Positionierung der Probe 1 in allen drei Raumrichtungen versehen. Die Beleuchtung erfolgt durch bei Lichtblattmikroskopen übliche Mittel. Ein Beleuchtungslaser 11 strahlt Licht mit einer Beleuchtungswellenlänge ab. In einer Strahlformungseinheit 12 wird ein Strahl geformt, dieser wird einem Lichtblattscanner 13 zugeführt, welcher der quasi-statischen Lichtblatterzeugung und der Positionierung des Lichtblatts dient. Über eine Tubuslinse 14 und das Objektiv O1 wird das Lichtblatt in die Probe 1 abgebildet. Die Strahlformungseinheit 12 dient dazu, dem Lichtstrahl ein gewünschtes Intensitätsprofil aufzuprägen, beispielsweise entsprechend einer Gauß-Verteilung oder eines Bessel-Strahls, welches dann auch durch das Scannen dem Lichtblatt im Querschnitt senkrecht zur Lichtblattebene aufgeprägt wird.

Das zu detektierende Licht tritt durch das Detektionsobjektiv O2, durchtritt einen dichroitischen Strahlteiler 15 und wird über eine Tubuslinse 16 auf einen flächenförmigen Detektor, der beispielsweise Teil einer Kamera 17 sein kann, abgebildet. Die detektierten Signale werden anschließend weiterverarbeitet und / oder dargestellt.

Zur Manipulation wird ein Stimulationslaser 18 verwendet, dessen Licht einem Stimulationsscanner 19, der hier als Punktscanner ausgestaltet ist, zugeführt, hier unter Zwischenschaltung eines Umlenkelements in Form eines Spiegels 20, welches nur dem kompakten Aufbau der Anordnung dient. Über eine weitere Linse 21 und einer der Linse 16 entsprechende Tubuslinse 22 wird das Manipulationslicht über den dichroitischen Strahlteiler 15 in den Detektionsstrahlengang eingekoppelt.

Mit der in Fig. 2 gezeigten Ausführung eines Lichtblattmikroskops erfolgt eine punktförmige Manipulation der Probe, der Fokus kann dabei auf die Lichtblattebene, aber auch in Bereiche ober- und unterhalb der Lichtblattebene eingestellt werden, so dass effektiv eine räumliche Manipulation möglich ist, jedoch prinzipiell nur für einzelne Punkte nacheinander. Für diese Fokusverschiebung in Bereiche außerhalb der Lichtblattebene kann eine weitere, verstellbare Optik, beispielsweise ein Kollimator, zwischen den Stimulationslaser 18 und den Stimulationsscanner 19 in den Strahlengang eingebracht werden, so dass der Manipulationsfokus unabhängig vom Detektionsfokus verstellbar ist. Bei entsprechender Auslegung des Stimulationslasers 18 sowie der Manipulationsoptik lässt sich die in Fig. 2 gezeigte Ausführung auch für die Mehrphotonen-Anregung verwenden. Durch Einbringen eines oder mehrerer weiterer optische Elemente, beispielsweise eines Mikrolinsenarrays zwischen Stimulationslaser 18 und Stimulationsscanner 19, wobei der Laserstrahl vor dem Mikrolinsenarray aufgeweitet und danach wieder kollimiert wird, lässt sich der im Zusammenhang mit Fig. 2 verwendete Punktscanner in einen Multipunkt-Scanner umwandeln. Dies ist hier nicht gezeigt.

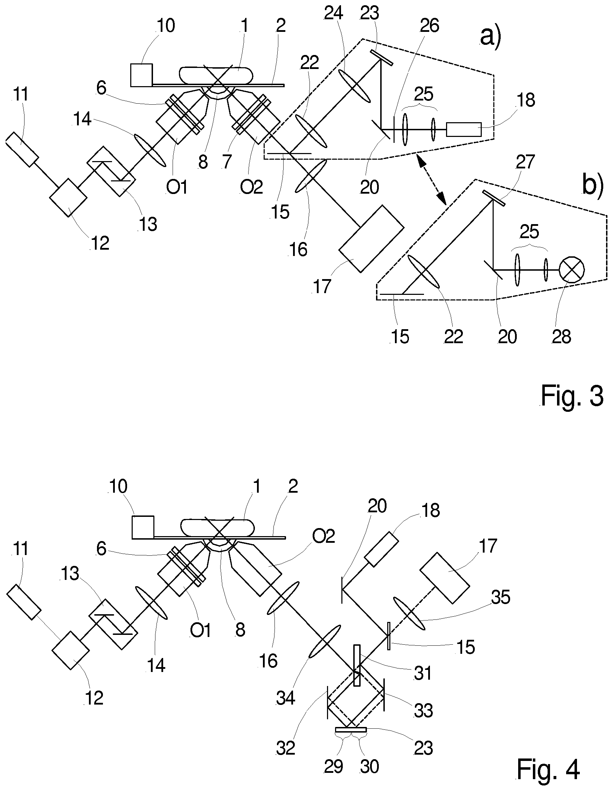

Fig. 3 zeigt in den Figuren a) und b) zwei weitere nicht erfindungsgemäße Ausgestaltungen eines Lichtblattmikroskops, bei dem die Manipulation durch das Detektionsobjektiv erfolgt. Das in Fig. 3b) gezeigte Modul lässt sich mit dem in Fig. 3a) gezeigten Modul austauschen, beide werden an gleicher Stelle im Strahlengang, gekennzeichnet durch den dichroitischen Strahlteiler 15, eingekoppelt. Der Aufbau muss dabei nicht notwendigerweise modular sein, es können auch zwei eigenständige Lichtblattmikroskope generiert werden, die nicht ineinander überführbar sind. Während bei der in Fig. 2 gezeigten Anordnung im Falle eines Punktscanners im Wesentlichen punktförmige Gebiete der Probe zeitlich sequentiell mit Lichtintensität beaufschlagt werden oder im Falle eines Multipunktscanners eine Vielzahl solcher punkförmiger Gebiete zeitlich sequentiell mit einer Lichtintensität beaufschlagt werden, wobei jeweils eine Anzahl gleichzeitig mit Lichtintensität beaufschlagt sind, ermöglichen die in Fig. 3a), b) gezeigten Anordnungen die räumliche Erzeugung von Intensitätsmustern in der Probe, d.h. sie ermöglichen die gleichzeitige Beaufschlagung einer Anzahl von im wesentlichen punktförmigen Gebieten mit Lichtintensität, wobei jeder Punkt unabhängig von den anderen Punkten beaufschlagt werden kann und die Punkte nicht nur in einer Ebene, sondern räumlich in einem Volumen verteilt sein können.

Bei der in Fig. 3a) gezeigten Ausführung umfassen die Mittel zur Manipulation einen ersten räumlichen Lichtmodulator 23 zur Beaufschlagung der Probe mit einer vorgegebenen Intensitätsverteilung. Als Lichtquelle dient wieder der Stimulationslaser 18. Da mittels des räumlichen Lichtmodulators 23 die Phase des Lichts geändert wird, muss der räumliche Lichtmodulator (SLM) 23 in einer Pupillenebene angeordnet sein, zur Abbildung ist daher eine weitere Linse 24 notwendig. Zusätzlich umfasst die Anordnung noch ein Teleskop 25, mit welchem die Ausleuchtung der Pupille bzw. des SLM 23 angepasst werden kann. Um die Polarisation anzupassen, kann optional ein Polarisationselement 26, beispielsweise ein Polarisator oder eine λ/2-Platte, im Strahlengang angeordnet sein. Im Falle von Fig. 3b) wird anstelle des SLM 23 ein digitales Mikrospiegelarray (DMD) 27 verwendet, auf die Linse 24 kann in diesem Fall verzichtet werden, da direkt die Intensität manipuliert wird, das DMD 27 ist dazu in einer Zwischenbildebene des Manipulationsstrahlengangs angeordnet. Als Lichtquelle kann auch in diesem Fall der Stimulationslaser 18 verwendet werden, es können jedoch grundsätzlich auch inkohärente Lichtquellen 28 verwendet werden, beispielsweise übliche Lampen - insbesondere im UV-Bereich - oder LEDs. Das DMD 27 wird zur Erzeugung eines Intensitätsmusters, d.h. einer vorgegebenen Intensitätsverteilung in einer Ebene, bevorzugt einer Ebene parallel zur Lichtblattebene oder in der Lichtblattebene, verwendet.

In Ergänzung zu Fig. 3a) können die Mittel zur Manipulation einen zweiten räumlichen Lichtmodulator, der hier nicht gezeigt ist, zur Beaufschlagung der vorgegebenen Intensitätsverteilung mit einer vorgegebenen Amplitudenverteilung umfassen.

Fig. 4 zeigt eine weitere nicht erfindungsgemäße Ausgestaltung für ein Lichtblattmikroskop, bei dem die Manipulation durch den Detektionsstrahlengang erfolgt. Bei dieser Ausführung weist der räumliche Lichtmodulator 23 einen ersten Bereich 29 auf, welcher zur Beaufschlagung der Probe mit einer vorgegebenen Intensitäts- oder Amplitudenverteilung und als Korrekturelement ausgebildet ist, sowie einen zweiten Bereich 30, welcher als Korrekturelement im Detektionsstrahlengang ausgebildet ist. Dabei sind Umlenkmittel zur Lenkung des zu detektierenden Lichts auf den zweiten Bereich 30 und des für die Manipulation verwendeten Lichts auf den ersten Bereich 29 vorgesehen. Auf die Wellenfrontmanipulatoren 7 im Detektionsobjektiv O2 kann in diesem Fall verzichtet werden. Dem SLM 23 wird in diesem Fall im zweiten Bereich 30 ein Phasenmuster aufgeprägt, welches ausschließlich der Korrektur der durch den schrägen Durchgang des Lichts durch das Trennschichtsystem mit dem Probenträger 2 verursachten Aberrationen dient, das zur Manipulation verwendete Licht trifft nicht auf diesen zweiten Bereich 30, sondern wird daran vorbeigelenkt. Dem ersten Bereich 29 des SLM 23 wird das Phasenmuster für die zu platzierende räumliche Intensitätsverteilung in der Probe aufgeprägt und zusätzlich ebenfalls das Phasenmuster für die Korrektur des schrägen Lichtdurchtritts. Der Strahlverlauf ist in Fig. 4 gezeigt. Das zu detektierende Licht ist gestrichelt gezeigt, das Manipulationslicht des Stimulationslasers 18 mit durchgezogener Linie. Die Umlenkungsmittel umfassen hier ein dichroitisches Element 31, dessen parallel zueinander ausgerichtete, aktive optische Flächen bevorzugt senkrecht zur aktiven optischen Fläche des räumlichen Lichtmodulators 23 angeordnet sind. Mittels zweier Planspiegel 32, 33, deren Spiegelflächen ebenfalls parallel zu den aktiven optischen Flächen des dichroitischen Elements 31 angeordnet sind, wird der Strahlengang so geführt, dass das für die Manipulation verwendete und das zu detektierende Licht jeweils zweimal auf das dichroitische Element 31 gelenkt werden. Mittels des dichroitischen Elements 31 - dessen Dicke anhand des notwendigen Strahlversatzes der Teilstrahlengänge auf dem SLM festgelegt wird, wobei der Strahlversatz selbst wiederum von der Größe der aktiven Flächen des SLM abhängt - wird die Umlenkung auf den ersten Bereich 29 bzw. den zweiten Bereich 30 erreicht. Im Detektionsstrahlengang finden sich außerdem zwei weitere Linsen 34 und 35, die eine 4f-Abbildung erzeugen, so dass Raum für die Unterbringung der zusätzlichen Komponenten, d.h. der Umlenkmittel geschaffen wird.

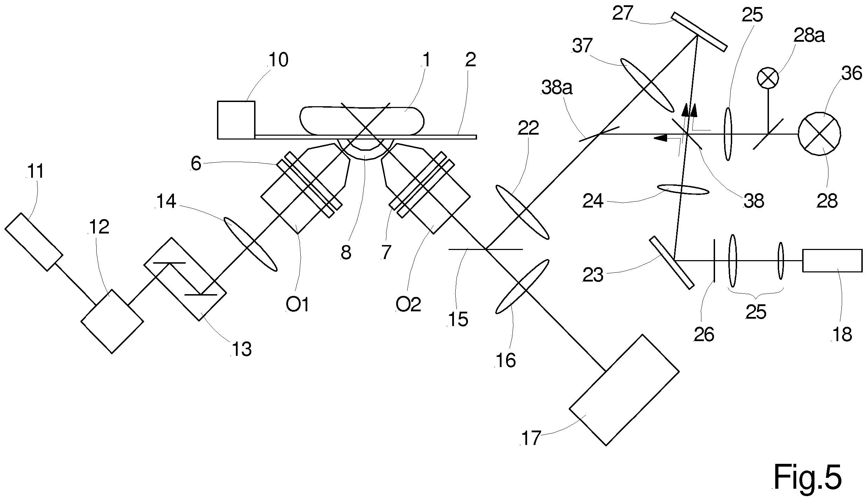

Eine weitere nicht erfindungsgemäße Ausgestaltung eines Lichtblattmikroskops, bei dem die Manipulation durch die Detektionsoptik erfolgt, ist in Figur 5 dargestellt. Die Mittel zur Manipulation umfassen hier sowohl einen SLM 23 mit Stimulationslaser 18 als auch ein DMD 27 mit zwei Lichtquellen 28, 28a, welche über einen Lichtquellenschaltspiegel 36 wahlweise in den Strahlengang zur Beleuchtung des DMD 27 eingekoppelt werden können. Im Falle des DMD-Strahlengangs wird das teleskopische System 25 nur durch eine Linse symbolisiert, die auch einen Kondensor symbolisieren soll. Zwischen dem DMD 27 und der Tubuslinse 22 ist eine weitere Linse 37 angeordnet, die den DMD 27 in eine Zwischenbildebene abbildet, die sich zwischen der Linse 37 und der Tubuslinse 22 befindet. Bei der Ausführung gemäß Fig.5 umfasst das Lichtblattmikroskop außerdem Umschaltmittel, insbesondere einen Schaltspiegel 38, der als zentrales Element durch entsprechende Stellung / Rotation im Strahlengang der Auswahl der Manipulationsmittel dient: Entweder wird ausschließlich das DMD 27, oder ausschließlich das SLM 23 als Manipulationsmittel zugeschaltet oder aber beide in Kombination. Insbesondere in letzterer Ausführung, bei der SLM 23 und DMD 27 gleichzeitig unter Verwendung eines Strahlvereinigers 38a in den Strahlengang eingekoppelt werden, kann die Manipulationsgeschwindigkeit gesteigert werden, da DMD mit Frequenzen von etwa 1kHz schneller sind als effiziente LCOS-SLM, die sich mit etwa 60 Hz schalten lassen. Mit einem entsprechenden Phasenmuster kann der SLM 23 dann beispielsweise mehrere räumliche, abgegrenzte Gebiete als ROI (region of interest) festlegen, die dann vom DMD 27 schnell und individuell zu- und abgeschaltet werden können.

Eine andere, nicht gezeigte Möglichkeit besteht auch in der Erzeugung eines beliebigen Musters durch ein SLM oder DMD oder mehrere SLM und DMD sowie der Verwendung eines Abtastsystems zum schnellen Schalten zwischen den Mustern.

Bei dem in Fig. 5 gezeigten Beispiel wird mit einem Lichtquellenschaltspiegel 36 eine von den beiden Lichtquellen, mit denen der DMD 27 hier beleuchtet werden kann, ausgewählt. Wenn nur zwischen zwei Lichtquellen, beispielsweise einem Laser und einer üblichen Lampe ausgewählt werden soll, kann im Falle der Verwendung eines DMD 27 zur Erzeugung der Intensitätsverteilung auf einen solchen Lichtquellenschaltspiegel 36 auch verzichtet werden, wenn man die Lichtquellen und den DMD 27 in bestimmten Positionen relativ zueinander anordnet: Das DMD 27 weist ein Array von Mikrospiegeln auf, welche zwischen zwei festen Winkeln geschaltet werden, beispielsweise zwischen einem Winkel von -12° für einen ersten Zustand "an" und +12° für einen zweiten Zustand "aus", jeweils gemessen von der Normalen der Grundfläche des DMD 27 aus, auf der die Mikrospiegel angeordnet sind. Ordnet man die Lichtquellen bzw. deren Strahlführung nun so an, dass das DMD 27 von der einen Lichtquelle im Zustand "an" und von der anderen Lichtquelle im Zustand "aus" beleuchtet wird und der weitere Manipulationsstrahlengang zunächst der Richtung der Normalen der Grundfläche des DMD 27 folgt, so ist der Lichtquellenschaltspiegel 36 nicht nötig. Eine Kombination mit einem oder mehreren Lichtquellenschaltspiegeln ist dennoch möglich, um die Auswahl möglicher Lichtquellen zu erhöhen, ebenso wie bei der in Fig. 5 gezeigten Variante.

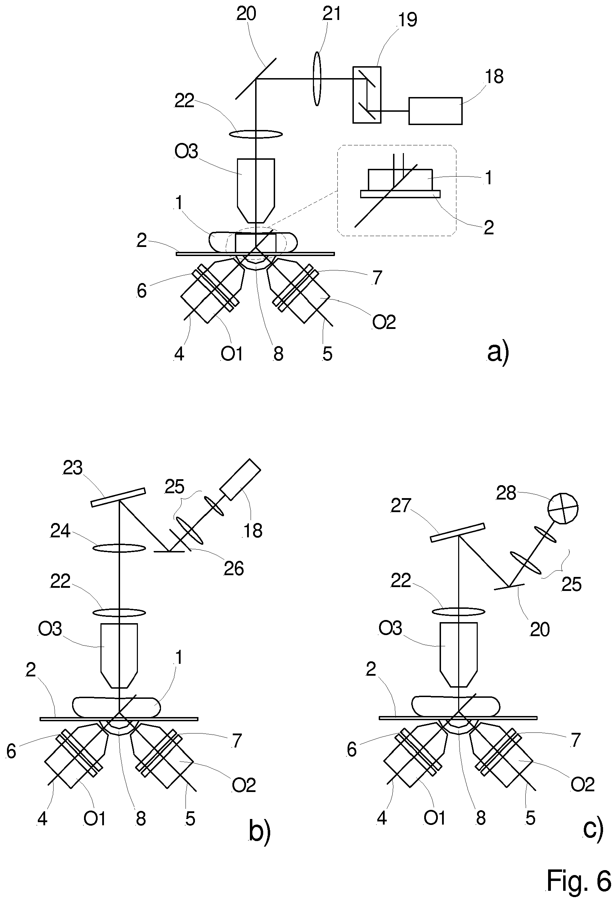

Die Mittel zu Manipulation erfassen erfindungsgemäß ein eigenes Manipulationsobjektiv, welches dann oberhalb der Probe, d.h. auf der anderen Seite des Probenträgers 2 angeordnet ist. Beispiele dafür sind in Fig. 6a)-c) in Prinzipdarstellungen gezeigt. Ein Manipulationsobjektiv O3 ist dabei mit seiner optischen Achse parallel zur Normalen der Bezugsfläche 3.

Fig. 6a) zeigt die Verwendung eines eigenen Manipulationsobjektivs O3 mit einem Punktscanner analog zu Fig. 2, die zu der dort gezeigten Ausgestaltung gemachten Ausführungen lassen sich auf diese Konfiguration im Wesentlichen übertragen. Analog korrespondiert die in Fig. 6b) gezeigte Ausführung mit einem SLM 23 zu der Ausführung in Fig. 3a), die in Fig. 6c) gezeigte Ausführung mit einem DMD 27 korrespondiert zu Fig. 3b). Auch hier ist eine Kombination mehrerer Manipulationsmöglichkeiten analog der im Zusammenhang mit Fig. 5 für das Detektionsobjektiv beschriebenen Kombination möglich. Auf Korrekturelemente kann bei der Manipulation von oben verzichtet werden, es sei denn, es wird ein mit einem Deckglas verschlossener Probenbehälter verwendet, und das Manipulationsobjektiv steht in einem von Null verschiedenen Winkel zur Normalen der Bezugsfläche.

Für die Manipulation müssen grundsätzlich zwei Fälle unterschieden werden, die im Folgenden anhand der erfindungsgemäßen Manipulation von oben durch ein eigenes Manipulationsobjektiv O3 beschrieben werden, für die nicht erfindungsgemäße Manipulation durch das Detektions- oder Beleuchtungsobjektiv jedoch ebenso gelten.

Bei einer schnellen Abbildung des Volumens, in dem die im Wesentlichen punktförmigen Gebiete mit Manipulationsintensität beaufschlagt werden, durch das Lichtblattsystem kann die Abfolge von Manipulation und Abbildung über das Volumen definiert werden. In diesem Fall kann die Auswirkung der Lichtverteilung, die durch die Manipulationseinrichtung im Volumen der Probe erzeugt wird, auch auf der Zeitskala der Abbildung dieses Volumens beobachtet werden. Dann kann die Manipulation sowohl in der Lichtblattebene als auch im Volumengebiet analog zu der Manipulation durchgeführt werden, wie sie im Zusammenhang mit der Manipulation durch das Detektionsobjektiv O2 beschrieben wurde. Falls jedoch die Zeitskala, auf der die Auswirkung der Manipulationsstrahlung beobachtet wird, so kurz ist, dass die Manipulation direkt innerhalb eines Kameraframes, also innerhalb des durch das Beleuchtungsobjektiv O1 erzeugten und durch das Detektionsobjektiv O2 detektierten Lichtblatts beobachtet werden muss, ist dafür Sorge zu tragen, dass die Intensitätsverteilung, welche durch das Manipulationsobjektiv O3 der Probe aufgeprägt wird, in der Lichtblattebene liegt, wie in dem gestricheltem Kasten in Fig. 6a) angedeutet. Im Falle von Fig. 6a) kann dies durch eine schnelle Fokussierung des Punktscanners erfolgen, beispielsweise durch eine Innenfokussierung des Manipulationsobjektivs O3, durch Verschieben der Tubuslinse 22, durch die Verwendung einer schnell verformbaren Linse, beispielsweise der Linse EL-10-30 der Firma Optotune, oder durch ein adaptives optisches Element, wie einen deformierbaren Spiegel. Im Falle eines SLM kann eine entsprechende räumliche Intensitätsverteilung, die in der Ebene des Lichtblatts liegt, vorgegeben werden.

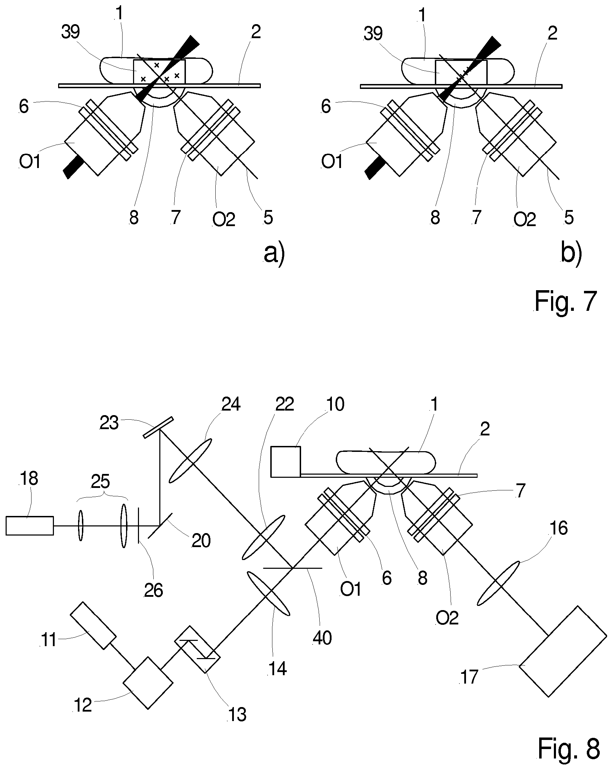

Die Manipulation kann auch durch das Beleuchtungsobjektiv O1 erfolgen, wobei die numerische Apertur des Beleuchtungsobjektivs in der Regel geringer als die des Detektionsobjektivs O2 ist. Einige Methoden, wie beispielsweise FRAP (Fluorescence recovery after photobleaching) benötigen jedoch keine größere NA und können für die Manipulation auf das Beleuchtungsobjektiv O1 zurückgreifen. Genau wie bei der Manipulation durch ein eigenes Manipulationsobjektiv O3 müssen wieder zwei Fälle unterschieden werden. Im ersten Fall ist die Volumenabbildung durch das Lichtblattsystem so schnell, dass die Abfolge von Manipulation und Abbildung über das Volumen definiert werden kann. Die Auswirkung der Lichtverteilung, die durch die Manipulationseinrichtung im Probenvolumen erzeugt wird, kann auch auf der Zeitskala der Abbildung dieses Volumens beobachtet werden. Dieser Fall ist in Fig. 7a) dargestellt. In einem ausgewähltem Probenvolumen 39 werden zu einem vorgegebenen Zeitpunkt räumlich verteilte, im Wesentlichen punktförmige Gebiete der Probe mit Lichtintensität beaufschlagt, beispielsweise mit einer vorgegebenen Intensitätsverteilung, die mit Hilfe eines inversen Fourier-Transformations-Algorithmus in ein Phasenmuster umgerechnet wird, welches einem räumlichen Lichtmodulator aufgeprägt wird. Dies kann beispielsweise mit einem Lichtblattmikroskop erreicht werden, wie es im Zusammenhang mit Fig. 8 beschrieben wird.

Im zweiten Fall ist die Zeitskala, auf der die Auswirkung der Manipulationsstrahlung beobachtet wird, so kurz, dass sie innerhalb eines Kameraframes, also innerhalb des durch das Beleuchtungsobjektiv O1 erzeugten und durch das Detektionsobjektiv O2 detektierten Lichtblatts beobachtet werden muss. Dies ist in Fig. 7b) gezeigt, die punktförmigen Gebiete sind hier als Strichelung des Lichtblatts zu erkennen, während sie in Figur 7a) als Kreuze im Volumen verteilt sind.

Fig. 8 zeigt, wie schon angedeutet, ein nicht erfindungsgemäßes Lichtblattmikroskop, bei dem das Manipulationsobjektiv mit dem Beleuchtungsobjektiv O1 identisch ist. Die Mittel zur Manipulation umfassen hier wieder einen SLM 23 nebst zughöriger Lichterzeugungs- und Abbildungsoptik. Die Einkopplung in den Beleuchtungsstrahlengang erfolgt über einen dichroitischen Strahlteiler 40.

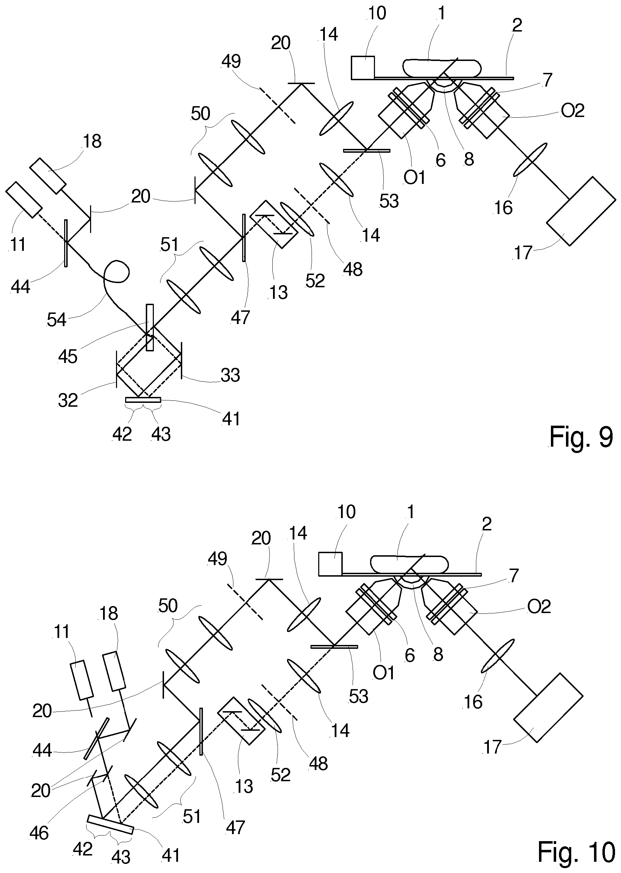

Räumliche Lichtmodulatoren sind teure und technisch komplexe Komponenten. Aus diesem Grund ist es, wenn die Manipulation durch das Beleuchtungsobjektiv O1 erfolgt, vorteilhaft, ein und denselben SLM sowohl für die Erzeugung des Lichtblatts als auch für die Vorgabe einer Intensitätsverteilung mittels Weitfeld-holographischer Methoden einzusetzen. In bevorzugten, in Fig. 9 und Fig. 10 gezeigten Ausgestaltungen, bei der das Manipulationsobjektiv mit dem Beleuchtungsobjektiv O1 identisch ist, umfasst die Beleuchtungsoptik einen räumlichen Lichtmodulator 41, dem in einem Manipulationsbereich 42 ein Phasenmuster für die Beaufschlagung der Probe mit einer vorgegebenen Intensitätsverteilung oder Amplitudenverteilung aufgeprägt ist, und dem in einem Lichtblatterzeugungsbereich 43 ein Phasenmuster für die Lichtblattformung aufgeprägt ist. Beide Bereiche sind unabhängig voneinander ansteuerbar, d.h. die Lichtblatterzeugung erfolgt weiterhin unabhängig von der Manipulation, auch wenn - nicht zwingend notwendig - dasselbe Element verwendet wird. In Analogie zu der im Zusammenhang mit Fig. 4 beschriebenen Anordnung kann der SLM 41 auch wieder als Korrekturelement fungieren, d.h. ihm kann zusätzlich ein entsprechendes Phasenmuster zur Korrektur der durch schrägen Lichtdurchtritt entstehenden Aberrationen aufgeprägt werden. Damit Licht für die Manipulation ausschließlich auf den Manipulationsbereich (42) und Licht für die Lichtblatterzeugung ausschließlich auf den Lichtblatterzeugungsbereich (43) gelenkt wird, umfasst die Beleuchtungsoptik entsprechende Umlenkmittel, die auch eine spektrale Zerlegung vornehmen können, da in der Regel jeweils verschiedene Wellenlängen für die Lichtblatterzeugung einerseits und die Manipulation andererseits verwendet werden.

Zwei Beispiele für nicht erfindungsgemäße Lichtblattmikroskope, bei denen ein SLM 41 verwendet wird, um sowohl das Lichtblatt als auch die Intensitätsverteilung zu erzeugen, sind in den Fig. 9 und 10 dargestellt. Voraussetzung ist, dass der Stimulationslaser 18 eine andere Wellenlänge emittiert als der Beleuchtungslaser 11, da dies zur Strahltrennung verwendet wird. Zunächst wird das Licht beider Lichtquellen über einen dichroitischen Strahlvereiniger 44 vereinigt und anschließend durch einen dichroitischen Strahlteiler 45 in Fig. 9 bzw. einen dichroitischen Strahlteiler 46 in Fig. 10 aufgeteilt, wobei bei der in Fig. 9 gezeigten Konfiguration analog wie bei der im Zusammenhang mit Fig. 4 beschriebenen Anordnung die Dicke des dichroitischen Strahlteilers 45 zur Umlenkung genutzt wird. Das zur Beleuchtung verwendete Licht wird auf den Lichtblatterzeugungsbereich 43 gelenkt, das zur Erzeugung der vorgegebenen Intensitätsverteilung verwendete Manipulationslicht des Stimulationslasers 18 auf den Manipulationsbereich 42 des SLM 41. Anschließend werden beide Lichtstrahlen entweder vereinigt, wie in Fig. 9 gezeigt, oder parallel, wie in Fig. 10 gezeigt, auf einen weiteren dichroitischen Strahlteiler 47 geführt. Bei der Beleuchtung des SLM 41 werden die Laserstrahlen durch entsprechende, nicht gezeigte Linsenkombinationen so aufgeweitet, dass sie den jeweiligen Bereich auf dem SLM 41 homogen ausleuchten. Der Bereich des SLM 41, der das Phasenmuster für die Lichtblattformung aufweist, also der Lichtblatterzeugungsbereich 43, muss bei der weiteren Abbildung in einer Zwischenbildebene 48 der Abbildung des Beleuchtungsobjektivs O1 liegen. Der Manipulationsbereich 42 muss hingegen in einer Pupillenebene 49 der Abbildung des Beleuchtungsobjektivs O1 liegen. Beide Bereiche des SLM 41 müssen also unterschiedlich abgebildet werden, was mit Hilfe des weiteren dichroitischen Strahlteilers 47 erreicht werden kann, der die Strahlengänge für Manipulationslicht und Beleuchtungslicht abermals aufteilt. Mittels einer ersten Optik 50 wird der Manipulationsbereich 42 in die Pupillenebene 49 des Beleuchtungsobjektivs O1 abgebildet. Der Lichtblatterzeugungsbereich 43 wird nur durch eine zweite Optik 51, durch die auch der Manipulationsbereich 42 abgebildet wird, über den Lichtblattscanner 13 und eine Scanlinse 52 in die Zwischenbildebene 48 des Beleuchtungsobjektivs O1 abgebildet. Mittels eines dichroitischen Strahlvereinigers 53 werden die beiden Wellenlängen wieder überlagert.

Die Ausführungen nach Fig. 9 und Fig. 10 unterscheiden sich im Wesentlichen nur in der Art der Farbteilung. In Fig. 9 ist eine Lösung analog zu Fig. 4 dargestellt, bei der die Strahlen immer überlagert sind, die aber einen dichroitischen Strahlteiler 45 auf einem relativ dicken Substrat erfordert, um eine ausreichende Separierung auf dem räumlichen Lichtmodulator 41 erzielen zu können. Die unterschiedlichen Wellenlängen der Laser können beispielsweise durch eine gemeinsame Lichtleitfaser 54 geführt werden, wobei zur Manipulation und/oder zur Lichtblatterzeugung auch mehr als eine Lichtwellenlänge verwendet werden können. Demgegenüber ist in Fig. 10 die ansonsten übliche Aufteilung der verschiedenen Wellenlängen auf unterschiedliche Pfade entlang des optischen Strahlengang dargestellt.

Auf die Abbildung des Manipulationsbereichs 42 in die Pupillenebene 49 kann auch verzichtet werden, d.h. es kann auch der in die Zwischenbildebene 48 abgebildete SLM 41 zur Manipulation eingesetzt werden. Voraussetzung ist, dass der Manipulationsbereich 42 vom Lichtblatterzeugungsbereich 43 spektral getrennt wird. Eine andere Möglichkeit besteht darin, die Manipulation schnell sequentiell ablaufen zu lassen, dann muss nur zwischen der vorgegebenen Intensitätsverteilung und dem Muster zur Lichtblatterzeugung zeitsynchron mit der Schaltung der jeweiligen Laser-Wellenlänge umgeschaltet werden. Dadurch werden allerdings die in der Probe erzeugbaren Intensitätsverteilungen in ihrer Zahl deutlich eingeschränkt.

Grundsätzlich ist auch eine Manipulation durch das Detektionsobjektiv O2 unter Nutzung eines in zwei Bereiche aufgeteilten SLM 41 mit einem Lichtblatterzeugungsberiech 43 und einem Manipulationsbereich 42 möglich, wobei die Strahlführung hier jedoch etwas aufwendiger als im Falle einer Manipulation durch das Beleuchtungsobjektiv O1 ist.

Wie im Falle von Fig. 2 für die nicht erfindungsgemäßen Manipulation durch das Detektionsobjektiv O2 oder im Falle von Fig. 6a) im Falle einer erfindungsgemäßen Manipulation durch ein eigenes Manipulationsobjektiv O3 können die Mittel zur Manipulation auch in dem Fall, dass das Beleuchtungsobjektiv mit dem Manipulationsobjektiv identisch ist, einen Punktscanner zur zeitlich sequentiellen Beaufschlagung einzelner, im Wesentlichen punktförmiger Gebiete der Probe mit Lichtintensität umfassen. Allerdings arbeitet ein solcher Punktscanner sequentiell und kann bei sehr schneller Lichtblatt-Bildgebung innerhalb einer Belichtungssequenz nur eine sehr begrenzte Anzahl von Positionen im Lichtblatt anfahren, insbesondere, da die Positionierung der Intensitätsverteilung axial, d.h. entlang der optischen Achse 4 des Beleuchtungsobjektivs O1 und demnach durch Umfokussierung erfolgen muss. Vorteilhaft ist es daher, bei Untersuchungen von Proben zunächst sequentiell die Manipulationsstrahlung, d.h. die Intensitätsverteilung entlang der optischen Achse an den vorgegebenen Punkten sequentiell entlang des Lichtblattes zu deponieren und dann schnell dieses im Wesentlichen flache Volumen der Probe 1 mit dem Lichtblatt abzubilden. Da der Lichtblattscanner 13 und der Stimulationsscanner 19 unabhängig voneinander betrieben werden, kann auch während der Lichtblatt-Bildgebung in gewünschten zeitlichen und / oder räumlichen Abständen vor oder hinter dem Lichtblatt manipuliert werden.

Insbesondere ist es dabei vorteilhaft, wenn die Lichtquellen, die Wellenlängen und die Intensitäten des Manipulationslichtes zur Anregung von Zwei- und Mehrphotonen-Übergängen ausgelegt sind, auf diese Weise kann die Beaufschlagung der Probe mit der entsprechenden Intensität auf den jeweiligen Fokus beschränkt werden, da der gaußförmige Strahl des Punktscanners bei linearer Anregung die Probe 1 entlang der optischen Achse 4 des Beleuchtungsobjektivs O1 komplett und u.U. wechselwirkend durchdringt.

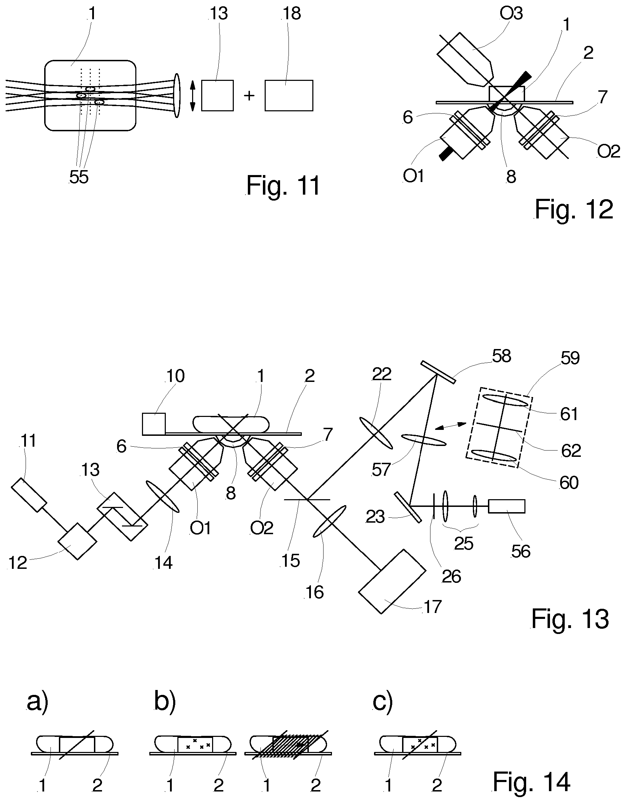

Bei Verwendung eines Punktscanners mit Mehrphotonenanregung kann eine axiale Einschränkung entlang der Manipulationsachse auch mittels einer zeitlichen Fokussierung (temporal focusing) erreicht werden. Für ein Lichtblattmikroskop ist dies beispielhaft in Fig. 11 dargestellt. Die zeitliche Fokussierung erfolgt hier im Lichtblatt, welches durch Abtasten erzeugt wird. Die Kontrolle über den Ort, welcher mit einer Intensität zur Manipulation beaufschlagt wird, erfolgt lateral durch den Scan im Lichtblatt, welches in Fig. 11 von oben gezeigt ist. Der Ort des Fokus entlang der Lichtblattachse, d.h. entlang der optischen Achse 4 des Beleuchtungsobjektivs O1 wird mittels des SLM festgelegt und durch die zeitliche Fokussierung mittels der Gruppengeschwindigkeits-Dispersionskontrolle des Stimulationslasers 18. Auf diese Weise lassen sich im in Fig. 11 von oben gezeigten Lichtblatt beispielsweise an den drei gezeigten Fokuspunkten 55 nacheinander Intensitäten deponieren.

Selbstverständlich ist es ebenfalls möglich, die Probe nicht nur aus einer Richtung gebietsweise mit Intensität zu beaufschlagen, sondern auch aus mehreren Richtungen, wie in Fig. 12 angedeutet, wobei alle drei Objektive, Manipulationsobjektiv O3, Detektionsobjektiv O2 und Beleuchtungsobjektiv O1 für die Beaufschlagung der Probe mit Lichtintensität verwendet werden. Aus unterschiedlichen Richtungen können dann auch unterschiedliche Manipulationsmethoden und / oder unterschiedliche Wellenlängen zum Einsatz kommen. Beispielsweise lassen sich zweidimensionale Gebiete simultan durch das Detektionsobjektiv O2 mittels eines DMD und einer ersten Wellenlänge erzeugen und räumlich verteilte Gebiete sequentiell durch das Manipulationsobjektiv O3 mittels eines SLM. Der DMD kann die schnelle Manipulation in der Lichtblattebene übernehmen, dies ist auch mit inkohärenten Lichtquellen mit Wellenlängen beispielsweise im UV-Bereich, die als Laser-Quellen kaum verfügbar sind, realisierbar. Der SLM, dessen Phasenmuster als Intensitätsverteilung durch das Manipulationsobjektiv O3 der Probe aufgeprägt wird, kann dann räumliche Gebiete mit anderen Wellenlängen sequentiell manipulieren.

Die Lichtblattanordnung mit zwei oder mehr Manipulationsobjektiven bietet auch die Möglichkeit, die Manipulationsstrahlung, d.h. die Strahlung zur Beaufschlagung der Probe mit Lichtintensität in im Wesentlichen punktförmigen Gebieten aus zwei oder drei Richtungen kohärent zu überlagern. In diesem nicht durch die beanspruchte Erfindung abgedeckten Fall kann es vorteilhaft sein, wenn beispielsweise das Detektionsobjektiv O2 und das Manipulationsobjektiv O3 eine gemeinsame optische Achse haben, da dann die gegenläufigen Wellenfronten zu kleinstmöglichen Ausdehnungen der Intensitätsverteilung in der Lichtblattebene interferieren können. Das Manipulationsobjektiv O3 kann dazu beispielsweise in eine Probenlösung, in der die Probe gelagert ist, eingetaucht werden (in Fig. 12 nicht gezeigt). Zur kohärenten Überlagerung muss der gemeinsam verwendete Stimulationslaser 18 auf die entsprechenden Strahlengänge für das Detektionsobjektiv O2 und das Manipulationsobjektiv O3 aufgeteilt werden.

Verwendet man ein Objektivpaar, das keine gemeinsame optische Achse hat, lässt sich auch ein Pump-Probe-Verfahren wie CARS verwenden, hier können die Pump-Strahlung und die Probe-Strahlung durch unterschiedliche Objektive der Anordnung geführt werden. Da nur im Überlappungsbereich der Pump-Strahlung und der Probe-Strahlung die gewünschte Wechselwirkung erfolgt, kann dadurch durch eine zusätzliche Einengung von Gebieten erreicht werden.

Wie bereits erwähnt, lässt sich eine Einschränkung der Intensitätsverteilung in Richtung der optischen Achse des für die Manipulation verwendeten Objektivs mittels Mehrphotonen-Anregung sehr vorteilhaft einstellen, insbesondere bei Verwendung eines Punktscanners zur Beaufschlagung der Probe mit entsprechender Lichtintensität, da dort immer ein fokussierter Strahl vorliegt. Bei den Ansätzen der Mikroskopie im Weitfeld auf Basis der Verwendung eines räumlichen Lichtmodulators und / oder eines DMD liegt je nach gewünschten Manipulationsmuster ein weniger stark fokussierter Strahl vor als bei Verwendung eines Punktscanners, wobei jedoch mittels zeitlicher Fokussierung auch im Weitfeld die Manipulations- und Intensitätsverteilung in Ausbreitungsrichtung eingeschränkt werden kann. Auf diese Weise kann der Effekt der Tiefendiskriminierung, der bei der punktscannenden Zwei-Photonen-Mikroskopie durch die quadratische Intensitätsabhängigkeit der Anregung in Kombination mit starker Fokussierung auftritt, auch in einer Weitfeldabbildung erreicht werden.

Fig. 13 zeigt eine entsprechende Anordnung, bei der zur nicht erfindungsgemäßen Manipulation durch das Detektionsobjektiv O2 die Mehrphotonen-Anregung verwendet wird. Als Manipulationslichtquelle wird hier ein Femtosekunden-Kurzpulslaser 56 verwendet. Beispielsweise kann ein Titan-Saphir-Laser verwendet werden. Mittels des Teleskops 25 wird sein Strahl entsprechend aufgeweitet, um den SLM 23 möglichst vollständig auszuleuchten. Dem SLM 23 ist zur Erzeugung einer vorgegebenen Intensitätsverteilung in der Probe ein entsprechendes räumliches Phasenmuster aufgeprägt. Über eine Linse 57 wird eine erste Fourier-Transformation des Phasenmusters auf ein entsprechend ausgebildetes Beugungsgitter 58 abgebildet. Das Beugungsgitter 58 steht in einer Zwischenbildebene im Detektionsstrahlengang und wird durch die Tubuslinse 22 und das Detektionsobjektiv O2 unter Verwendung der Korrekturelemente, hier der Wellenfrontmanipulatoren 7, in die Probe abgebildet. Durch die spektrale Aufspaltung der Pulse am Beugungsgitter 58 kommt es aufgrund der zeitlichen Fokussierung zur axialen Einschränkung der Beleuchtung, auf die gewünschten punktförmigen Gebiete in der Probe beschränkt.

Anstelle einer einzelnen Linse 57 kann das Phasenmuster des SLM 23 auch über eine 4f-Anordnung 59 mit zwei Linsen 60 und 61 auf das Gitter abgebildet werden. Ein Phasenelement 62 in einer Pupillenebene dieser 4f-Anordnung 59 führt zu einer Phasenverschiebung der nullten Beugungsordnung um π gegenüber der gebeugten Strahlung, oder umgekehrt. So wird das Phasenmuster nach der 4f-Abbildung direkt in eine Intensitätsverteilung auf den Beugungsgitter 58 umgewandelt.

Die Bildgebung kann bei den vorangehend beschriebenen Lichtblattmikroskopen allgemein auf zwei Arten erfolgen:
Beim sogenannten Probenscan stehen das Beleuchtungsobjektiv O1 und das Detektionsobjektiv O2 ortsfest, das Lichtblatt wird über den Lichtblattscanner 13 in der Fokusebene des Detektionsobjektivs O2 positioniert. Über die Probentischsteuerung 10 wird die Probe dann in der in dem gestrichelt gezeichneten Bildausschnitt in Fig. 1 gezeigten Richtung geführt.

Beim sogenannten Lichtblattscan bleibt die Probe 1 ortsfest angeordnet, jedoch muss dann für die Bildgebung das Lichtblatt gescannt werden. Damit sich das Lichtblatt nicht aus dem Fokus bewegt, muss das Detektionsobjektiv O2 nachgeführt werden, ebenso das Beleuchtungsobjektiv O1, damit die Strahltaille des Lichtblatts im Zentrum des Bildfelds bleibt. Alternativ kann die Strahltaille auch durch eine andere Art der Fokussierung, wie eine Innenfokussierung etc. nachgeführt werden.

Fig. 14 zeigt verschiedene zeitliche und räumliche Abfolgen von Manipulation und Abbildung. In Fig. 14a) ist die simultane Manipulation und Abbildung in der Lichtblattebene gezeigt. Die zur Manipulation verwendete Lichtintensität wird dabei zu einem gegebenen Zeitpunkt t in der Lichtblattebene deponiert und ihre Auswirkung kann in dieser Ebene sofort beobachtet werden. Diese Vorgehensweise lässt sich beim Probenscan und beim Lichtblattscan am besten mit einer ebenen Manipulation, beispielsweise unter Verwendung eines DMD durch das Detektionsobjektiv O2 realisieren, beispielsweise also mit Anordnungen, wie sie in Fig. 3 oder Fig. 4 gezeigt sind.

Fig. 14b) zeigt die sequentielle Abfolge von Manipulation und Abbildung, sowie räumlich als auch zeitlich. Zunächst wird die vorgegebene räumliche Intensitätsverteilung an den gewünschten im wesentlichen punktförmigen Gebieten - markiert durch Kreuze - im Beobachtungsvolumen deponiert, dann wird dieses Beobachtungsvolumen, dargestellt durch den rechteckigen Kasten in der Probe, abgebildet, gegebenenfalls auch mehrfach um den zeitlichen Verlauf der Auswirkung der Manipulation zu beobachten. Diese Vorgehensweise lässt sich sowohl beim Probenscan als auch beim Lichtblattscan mit prinzipiell allen vorangehend genannten Varianten, die eine räumliche Manipulation ermöglichen, umsetzen, da durch die sequentielle Abfolge keine Randbedingungen an die Manipulation gestellt werden.

Bei der in Fig. 14c) gezeigten gemischten Vorgehensweise wird die Manipulationsstrahlung während des bildgebenden Lichtblattscans zu gewünschten Zeitpunkten und / oder an gewünschten Orten im Lichtblatt, davor und / oder dahinter eingebracht. Darüber hinaus besteht auch die Möglichkeit, während das Volumen abgebildet wird, fortlaufend auch das räumliche Manipulationsvolumen anzupassen, um auf diese Weise beispielsweise sehr schnelle Formänderungen in der Probe auszugleichen, oder um für Lichtblattpositionen zwei unterschiedliche Volumen zur Deponierung von Manipulationsintensität zu erzeugen.

Mit den vorangehend beschriebenen Anordnungen zur Lichtblattmikroskopie ist eine besonders schonende Beobachtung der Probe bei gleichzeitiger Manipulation möglich.

### Bezugszeichenliste

- 1: Probe
- 2: Probenträger
- 3: ebene Bezugsfläche
- 4, 5: optische Achse
- 6, 7: Wellenfrontmanipulator
- 8: optisches Übertragungssystem
- 9: Manipulationsstrahl
- 10: Probentischsteuerung
- 11: Beleuchtungslaser
- 12: Strahlformungseinheit
- 13: Lichtblattscanner
- 14: Tubuslinse
- 15: dichroitischer Strahlteiler
- 16: Tubuslinse
- 17: Kamera
- 18: Stimulationslaser
- 19: Stimulationsscanner
- 20: Spiegel
- 21: Laser
- 22: Tubuslinse
- 23: erster räumlicher Lichtmodulator (SLM)
- 24: Linse
- 25: Teleskop
- 26: Polarisationselement
- 27: digitales Mikrospiegelarray (DMD)
- 28, 28a: Lichtquelle
- 29: erster Bereich
- 30: zweiter Bereich
- 31: dichroitisches Element
- 32, 33: Planspiegel
- 34, 35: Linse
- 36: Lichtquellenschaltspiegel
- 37: Linse
- 38: Schaltspiegel
- 38a: Strahlvereiniger
- 39: Probenvolumen
- 40: dichroitischer Strahlteiler
- 41: räumlicher Lichtmodulator
- 42: Manipulationsbereich
- 43: Lichtblatterzeugungsbereich
- 44: dichroitischer Strahlvereiniger
- 45, 46: dichroitischer Strahlteiler
- 47: weiterer dichroitischer Strahlteiler
- 48: Zwischenbildebene
- 49: Pupillenebene
- 50: erste Optik
- 51: zweite Optik
- 52: Scanlinse
- 53: dichroitischer Strahlvereiniger
- 54: Lichtleitfaser
- 55: Fokuspunkt
- 56: Femtosekunden-Laser
- 57: Linse
- 58: Beugungsgitter
- 59: 4f-Anordnung
- 60, 61: Linse
- 62: Phasenelement

- O1: Beleuchtungsobjektiv
- O2: Detektionsobjektiv
- O3: Manipulationsobjektiv

## Patentansprüche

1. Lichtblattmikroskop, umfassend
- eine Beleuchtungsoptik zur Beleuchtung einer Probe (1), welche sich auf einem Probenträger (2) in einen Medium befindet, wobei der Probenträger (2) parallel zur einer ebenen Bezugsfläche (3) ausgerichtet ist, über einen Beleuchtungsstrahlengang mit einem Lichtblatt, dessen Lichtblattebene mit der Normalen der Bezugsfläche (3) einen von Null verschiedenen Beleuchtungswinkel einschließt,
- eine Detektionsoptik mit einem Detektionsstrahlengang mit einer optischen Achse (5), die im Bereich des Probenträgers (2) mit der Normalen der Bezugsfläche (3) einen von Null verschiedenen Detektionswinkel einschließt,
- ein Trennschichtsystem mit mindestens einer Schicht aus einem vorgegebenen Material mit vorgegebener Dicke, welche das Medium von der Beleuchtungs- und von der Detektionsoptik trennt, wobei das Trennschichtsystem mit einer parallel zur Bezugsfläche (3) ausgerichteten Grundfläche zumindest in dem für Beleuchtung und Detektion zugänglichen Bereich mit dem Medium in Kontakt steht, wobei
- das Lichtblattmikroskop von der Lichtblatterzeugung unabhängige Mittel zur Beaufschlagung der Probe (1) mit Lichtintensität in im Wesentlichen punktförmigen Gebieten in der Lichtblattebene oder in einem vorgegebenen, die Lichtblattebene mindestens zeitweise umfassenden Volumen über mindestens einen Manipulationsstrahlengang umfasst. **dadurch gekennzeichnet, dass**
- die Mittel zur Manipulation ein separates Manipulationsobjektiv (O3) im Manipulationsstrahlengang umfassen, welches mit seiner optischen Achse parallel zur Normalen der Bezugsfläche (3) angeordnet ist,
- und das Lichtblattmikroskop mindestens ein Korrekturelement im Beleuchtungs- und / oder im Detektionsstrahlengang zur Verringerung von solchen Aberrationen, welche aufgrund des schrägen Durchtritts von zu detektierendem Licht bzw. von Licht zur Beleuchtung der Probe (1) durch Grenzflächen des Trennschichtsystems entstehen, umfasst.

2. Lichtblattmikroskop nach Anspruch1, **dadurch gekennzeichnet, dass** die Beleuchtungsoptik ein Beleuchtungsobjektiv (O1) und die Detektionsoptik ein Detektionsobjektiv (O2) umfasst.

3. Lichtblattmikroskop nach Anspruch 2, **dadurch gekennzeichnet, dass** das Beleuchtungsobjektiv (O1) mit dem Detektionsobjektiv (O2) identisch ist.

4. Lichtblattmikroskop nach einem der Ansprüche 2 oder 3, **dadurch gekennzeichnet, dass** die Mittel zur Manipulation einen Punktscanner zur zeitlich sequentiellen Beaufschlagung einzelner im Wesentlichen punktförmiger Gebiete der Probe (1) mit Lichtintensität oder einen Multipunktscanner zur zeitlich sequentiellen Beaufschlagung einer Vielzahl im Wesentlichen punktförmiger Gebiete der Probe (1), von denen jeweils eine Anzahl gleichzeitig mit Lichtintensität beaufschlagbar ist, umfassen.

5. Lichtblattmikroskop nach einem der Ansprüche 2 bis 4, **dadurch gekennzeichnet, dass** die Mittel zur Manipulation einen ersten räumlichen Lichtmodulator (23, 41), der zur Photostimulation in räumlichen ausgedehnten Gebieten ausgelegt ist, zur Beaufschlagung der Probe mit einer vorgegebenen Intensitätsverteilung umfassen.

6. Lichtblattmikroskop nach Anspruch 5, **dadurch gekennzeichnet, dass** die Mittel zur Manipulation einen zweiten räumlichen Lichtmodulator zur Beaufschlagung der vorgegebenen Intensitätsverteilung mit einer vorgegebenen Amplitudenverteilung umfassen.

7. Lichtblattmikroskop nach einem der Ansprüche 2 bis 6, **dadurch gekennzeichnet, dass** die Mittel zur Manipulation ein digitales Mikrospiegelarray (27) zur Erzeugung einer vorgegebenen Intensitätsverteilung in einer Ebene, bevorzugt parallel zur Lichtblattebene, besonders bevorzugt in der Lichtblattebene umfassen.

8. Lichtblattmikroskop nach Anspruch 7, sofern rückbezogen auf Anspruch 5 oder 6, umfassend ein Umschaltmittel, bevorzugt einen Schaltspiegel (38) zur Umschaltung zwischen dem ersten räumlichen Lichtmodulator (23), dem digitalen Mikrospiegelarray (27) oder einer Kombination von beiden.

9. Lichtblattmikroskop nach einem der Ansprüche 1 bis 8, **dadurch gekennzeichnet, dass** die Lichtquellen, Wellenlängen und Intensitäten des Manipulationslichts zur Anregung von Zwei- und Mehrphotonen-Übergängen ausgelegt sind.

## Claims

1. A light sheet microscope, comprising:
- illumination optics for illuminating a sample (1) which is located on a sample carrier (2) in a medium, the sample carrier (2) being aligned parallel to a flat reference surface (3), via an illumination beam path with a light sheet whose light sheet plane encloses a non-zero illumination angle with the normal of the reference surface (3),
- detection optics with a detection beam path with an optical axis (5) which encloses a non-zero detection angle, in the region of the sample carrier (2), with the normal of the reference surface (3),
- a separating layer system with at least one layer of a predetermined material having a predetermined thickness, which separates the medium from the illumination and detection optics, wherein the separating layer system is in contact with the medium, at least in the region accessible for illumination and detection, via a base surface aligned parallel to the reference surface (3), wherein
- the light sheet microscope comprises means, independent of the light sheet generation, for applying light intensity to the sample (1) in substantially point-shaped areas in the light sheet plane or in a predetermined volume at least temporarily encompassing the light sheet plane via at least one manipulation beam path, **characterised in that**
- the means for manipulation comprise a separate manipulation objective (O3) in the manipulation beam path, which is arranged with its optical axis parallel to the normal of the reference surface (3),
- and the light sheet microscope comprises at least one correction element in the illumination and/or detection beam path for reducing such aberrations which arise due to the oblique passage of light to be detected or of light for illuminating the sample (1) through interfaces of the separating layer system.

2. The light sheet microscope according to claim 1, **characterised in that** the illumination optics comprise an illumination objective (O1) and the detection optics comprise a detection objective (O2).

3. The light sheet microscope according to claim 2, **characterised in that** the illumination objective (O1) is identical to the detection objective (O2).

4. The light sheet microscope according to any one of claims 2 or 3, **characterised in that** the means for manipulation comprise a point scanner for the temporally sequential application of light intensity to individual substantially point-shaped areas of the sample (1) or a multipoint scanner for the temporally sequential application of light intensity to a plurality of substantially point-shaped areas of the sample (1), to a number of which light intensity can be simultaneously applied in each case.

5. The light sheet microscope according to any one of claims 2 to 4, **characterised in that** the means for manipulation comprise a first spatial light modulator (23, 41) adapted for photostimulation in spatially extended areas for applying a predetermined intensity distribution to the sample.

6. The light sheet microscope according to claim 5, **characterised in that** the means for manipulation comprise a second spatial light modulator for applying a predetermined amplitude distribution to the predetermined intensity distribution.

7. The light sheet microscope according to any one of claims 2 to 6, **characterised in that** the means for manipulation comprise a digital micromirror array (27) for generating a predetermined intensity distribution in a plane, preferably parallel to the light sheet plane, particularly preferably in the light sheet plane.

8. The light sheet microscope according to claim 7, if referring back to claim 5 or 6, comprising a switching means, preferably a switching mirror (38) for switching between the first spatial light modulator (23), the digital micromirror array (27) or a combination of both.

9. The light sheet microscope according to any one of claims 1 to 8, **characterised in that** the light sources, wavelengths and intensities of the manipulation light are designed to excite two-photon and multiphoton transitions.

## Revendications

1. Microscope à feuille de lumière, comprenant
- une optique d'éclairage pour éclairer un échantillon (1) qui se trouve sur un support d'échantillon (2) dans un milieu, le support d'échantillon (2) étant orienté parallèlement à une surface de référence plane (3), par l'intermédiaire d'un trajet de faisceau d'éclairage avec une feuille de lumière dont le plan de feuille de lumière forme avec la normale à la surface de référence (3) un angle d'éclairage différent de zéro,
- une optique de détection avec un trajet de faisceau de détection ayant un axe optique (5) qui, dans la zone du support d'échantillon (2), forme avec la normale à la surface de référence (3) un angle de détection différent de zéro,
- un système de couches de séparation avec au moins une couche d'un matériau prédéterminé d'une épaisseur prédéterminée, qui sépare le milieu de l'optique d'éclairage et de l'optique de détection, le système de couches de séparation étant en contact avec le milieu, au moins dans la zone accessible pour l'éclairage et la détection, avec une surface de base orientée parallèlement à la surface de référence (3), où
- le microscope à feuille de lumière comprend des moyens indépendants de la génération de feuille de lumière pour exposer l'échantillon (1) à une intensité lumineuse dans des zones essentiellement ponctuelles dans le plan de la feuille de lumière ou dans un volume prédéterminé entourant au moins temporairement le plan de la feuille de lumière par l'intermédiaire d'au moins un trajet de faisceau de manipulation, **caractérisé en ce que**
- les moyens de manipulation comprennent un objectif de manipulation séparé (O3) dans le trajet de faisceau de manipulation, qui est disposé avec son axe optique parallèle à la normale de la surface de référence (3),
- et le microscope à feuille de lumière comprend au moins un élément de correction dans le trajet de faisceau d'éclairage et/ou de détection pour réduire de telles aberrations qui apparaissent en raison du passage oblique de la lumière à détecter ou de la lumière destinée à éclairer l'échantillon (1) à travers des surfaces limites du système de couches de séparation.

2. Microscope à feuille de lumière selon la revendication 1, **caractérisé en ce que** l'optique d'éclairage comprend un objectif d'éclairage (O1) et l'optique de détection comprend un objectif de détection (O2).

3. Microscope à feuille de lumière selon la revendication 2, **caractérisé en ce que** l'objectif d'éclairage (O1) est identique à l'objectif de détection (O2).

4. Microscope à feuille de lumière selon l'une quelconque des revendications 2 ou 3, **caractérisé en ce que** les moyens de manipulation comprennent un scanner ponctuel pour l'exposition séquentielle dans le temps de zones individuelles essentiellement ponctuelles de l'échantillon (1) à une intensité lumineuse ou un scanner multipoint pour l'exposition séquentielle dans le temps d'une pluralité de zones essentiellement ponctuelles de l'échantillon (1), dont un nombre respectif peut être exposé simultanément à une intensité lumineuse.

5. Microscope à feuille de lumière selon l'une quelconque des revendications 2 à 4, **caractérisé en ce que** les moyens de manipulation comprennent un premier modulateur spatial de lumière (23, 41) adapté pour la photostimulation dans des zones étendues dans l'espace, pour exposer l'échantillon à une distribution d'intensité prédéterminée.

6. Microscope à feuille de lumière selon la revendication 5, **caractérisé en ce que** les moyens de manipulation comprennent un deuxième modulateur spatial de lumière pour appliquer une distribution d'amplitude prédéterminée à la distribution d'intensité prédéterminée.

7. Microscope à feuille de lumière selon l'une quelconque des revendications 2 à 6, **caractérisé en ce que** les moyens de manipulation comprennent un réseau numérique de micro-miroirs (27) pour générer une distribution d'intensité prédéterminée dans un plan, de préférence parallèle au plan de la feuille de lumière, de manière particulièrement préférée dans le plan de la feuille de lumière.

8. Microscope à feuille de lumière selon la revendication 7, lorsqu'il est fait référence à la revendication 5 ou 6, comprenant un moyen de commutation, de préférence un miroir de commutation (38) pour la commutation entre le premier modulateur spatial de lumière (23), le réseau numérique de micro-miroirs (27) ou une combinaison des deux.

9. Microscope à feuille de lumière selon l'une quelconque des revendications 1 à 8, **caractérisé en ce que** les sources de lumière, les longueurs d'onde et les intensités de la lumière de manipulation sont adaptées pour exciter des transitions à deux et plusieurs photons.
